(19)

Europäisches
Patentamt
European
Patent Office
Office européen
des brevets

(11) **EP 4 304 130 B1**

(12) **EUROPEAN PATENT SPECIFICATION**

(45) Date of publication and mention
of the grant of the patent:
**01.10.2025 Bulletin 2025/40**

(21) Application number: **22315135.8**

(22) Date of filing: **06.07.2022**

(51) International Patent Classification (IPC):
**H04L 9/08** *(2006.01)* **H04L 9/32** *(2006.01)*
**H04L 9/00** *(2022.01)* **G06F 21/64** *(2013.01)*

(52) Cooperative Patent Classification (CPC):
**G06F 21/64; H04L 9/085; H04L 9/3242;
H04L 9/3255; H04L 9/50**

(54) **VERIFYING AUTHENTICITY OF A TRANSACTION MESSAGE**

ÜBERPRÜFUNG DER AUTHENTIZITÄT EINER TRANSAKTIONSNACHRICHT

VÉRIFICATION DE L'AUTHENTICITÉ D'UN MESSAGE DE TRANSACTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.01.2024 Bulletin 2024/02**

(73) Proprietor: **DFNS
75013 Paris (FR)**

(72) Inventor: **FERRADI, Houda
75013 Paris (FR)**

(74) Representative: **DeltaPatents B.V.
Fellenoord 370
5611 ZL Eindhoven (NL)**

(56) References cited:
**US-A1- 2021 049 600**

- PARVIN RASTEGARI ET AL: "Multi-designated verifiers signature schemes with threshold verifiability: generic pattern and a concrete scheme in the standard model", IET INFORMATION SECURITY, THE INSTITUTION OF ENGINEERING AND TECHNOLOGY, MICHAEL FARADAY HOUSE, SIX HILLS WAY, STEVENAGE, HERTS. SG1 2AY, UK, vol. 13, no. 5, 1 September 2019 (2019-09-01), pages 459 - 468, XP006106094, ISSN: 1751-8709, DOI: 10.1049/ IET-IFS.2018.5063
- ZHONG HONG ET AL: "A Lightweight and Secure Data Authentication Scheme with Privacy Preservation for Wireless Sensor Networks", 2016 INTERNATIONAL CONFERENCE ON NETWORKING AND NETWORK APPLICATIONS (NANA), IEEE, 23 July 2016 (2016-07-23), pages 210 - 217, XP032958983, DOI: 10.1109/ NANA.2016.85

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The invention relates to a system for verifying authenticity of a transaction; to sender and recipient signer nodes for use in such a system; to computer-implemented methods corresponding to the sender and recipient signer nodes; and to a computer-readable medium.

**BACKGROUND OF THE INVENTION**

Distributed ledgers, such as Ethereum, Bitcoin, and other kinds of blockchains, are being used more and more to perform transactions. A transaction may in general represent a transfer of a crypto-asset, e.g., an amount of cryptocurrency, from a sender to a recipient. In return for the transfer, the recipient may for example provide goods or services, or assets in another currency, e.g., a cryptocurrency or a non-digital currency.

Although blockchain-based systems have received growing interests in both academia and industry in the recent years, the scalability of blockchains continues to be a big issue when deploying blockchain in finance applications. For example, Ethereum in its current iteration processes around 15 transactions per second. This causes several issues. In particular, the network often gets congested, sometimes pushing transaction fees to extreme highs. To tackle these issues, a completely different class of protocols have been emerging, called Layer-2 protocols, using different approaches. Layer 2 solutions increase transaction speeds and scaling, while benefiting from the security of the main chain. In some implementations, they can achieve thousands of transactions per second, which is desirable for example for instant payment applications.

However, such adoption raises new security attacks against layer-2 protocols. For example, layer 2 protocol can have poor custodian and exchange security, leading to a large number of hacks and thefts as discussed for example in A. Gangwal et al., "A Survey of Layer-Two Blockchain Protocols" (available at https://arxiv.org/pdf/2204.08032.pdf). Existing solutions to detect and report fraud during the offchain transaction, such as watchtowers (as discussed e.g. in the above reference), can represent new security attacks when compromised and hence acting dishonestly.

Typically, ownership of a crypto-asset wallet is defined in terms of knowledge of certain private key material. This private key material may be stored in a so-called wallet. Respective key material may correspond to respective entries of the user's blockchain address book. In today's systems, this key material may represent a secret key that is used to sign a transaction, effectively giving the user control over the crypto-asset associated to that address. Accordingly, a wallet may contain private key material without which the crypto-asset owner cannot access their funds.

A big risk in cryptocurrencies is the individual user losing the private key material or having it stolen. Without the private key material, the user cannot use their crypto-assets. If an attacker can steal a wallet's key material, they can move the crypto-assets associated to that address into their own wallet and thereby steal it. Many examples are known where such failures caused big losses, in some cases millions of euros.

Generally, there are two types of wallets that a user can use to store crypto-assets: a custodial wallet and a non-custodial (also known as personal) wallet. With a non-custodial wallet, the user has sole control of his private key material, which in turn control and prove ownership of the corresponding crypto-assets. While there is no need to trust a third party when using a non-custodial wallet, this also means that the user is solely responsible for not losing their key material, and requires the user to take their precautions to protect their funds. With a custodial wallet, a third party controls the user's private key material. In other words, the user is trusting a third party to secure their crypto-assets and return them the user wants to perform a transaction, e.g., trade them or send them to another party. While a custodial wallet lessens personal responsibility, it requires trust in the custodian, usually a cryptocurrency exchange platform, holding the user's fund.

A known way to protect the private key material used for transactions on a distributed ledger, is the use of a Threshold Signature Schemes (TSS) or Multi-Signatures. Instead of storing keys at a single location, private keys are split among multiple nodes, and signing is authorized by a quorum (threshold set) of nodes, without the need for key shares to leave the nodes. Moreover, in the context of Layer 2 protocols in which the transactions are P2P, not only the private key is vulnerable, but also the public key, or its hash, which is typically used as deposit address, runs the risk of so-called public-key substitution, namely, of the key being intercepted and modified by an attacker. Such public-key substitution attacks are commonplace and documented at length.

**SUMMARY OF THE INVENTION**

It would be desirable to provide a system for verifying authenticity of a digital transaction that provides improved security, in particular against public-key substitution attacks. In particularly, it would be desirable to provide a non-custodial solution for performing and verifying digital transactions, in particular in a layer 2 protocol of a distributed ledger, that eliminates the single point of failure on private keys, either on sender and recipient sides.

In accordance with a first aspect of the invention, a system for verifying authenticity is provided, as defined by claim 1. In accordance with further aspects of the invention, a sender signer node and a recipient signer node for use in such a system, and computer-implemented methods corresponding to the respective nodes, are provided, as defined by claims 11, 12, 13, and 14. In accordance with an aspect of the invention, a computer-readable medium is provided as defined by claim 15.

Various aspects relate to a digital transaction. The transaction may be performed on a distributed ledger, for example, a public blockchain such as Ethereum or Bitcoin, or a private blockchain. In particular, the transaction may be performed in a layer 2 protocol of a distributed ledger, for example, on a sidechain of a main chain, such as a state channel network. In such a case, the transaction may be performed according to the layer 2 protocol and later committed, e.g., in combination with other transactions, to the mainchain.

The transaction may be between a sender and a recipient. For example, the transaction may represent a transfer of a crypto-asset, e.g., a certain amount of a certain type of cryptocurrency, from the sender to the recipient. The transaction message may comprise an identifier of the recipient of the transaction, typically in combination with data indicating a crypto-asset being transferred. The identifier of the recipient is typically not specific to any particular crypto-asset, e.g., multiple crypto-assets may correspond to the same recipient identifier. Accordingly, presence of the transaction message on the distributed ledger may indicate that the crypto-asset has changed ownership to the recipient. In particular, in the case of a layer 2 protocol of a distributed ledger, change of ownership may be indicated at the corresponding mainchain, e.g., the state of the sidechain may be locked via a multisignature smart contract; based on which a transaction for the mainchain may be constructed, and the transaction may be posted on the mainchain to submit the state of the sidechain on the blockchain.

On behalf of the sender, the transaction may be performed by one or more sender signer nodes. The sender signer nodes may provide a custodian wallet to the sender, in particular, a distributed custodian wallet in case there are multiple sender signer nodes. The respective sender signer nodes may have access to respective pre-shared sender key material. The combined pre-shared sender key material of the sender signer nodes may prove ownership of a crypto-asset being transferred in the transaction. The key material may be shared between multiple crypto-assets of the sender. By "pre-shared", it is meant that the key material is available to the respective parties before the authenticity verification takes place, e.g., the parties may have previously obtained it by receiving it from a key generation device, or as an outcome of a distributed key generation protocol.

On behalf of the recipient, the transaction may be performed by one or more recipient signer nodes. The recipient signer nodes may provide a custodian wallet to the recipient, in particular, a distributed custodian wallet in case there are multiple recipient signer nodes. The respective recipient signer nodes may have access to respective pre-shared recipient key material. The combined pre-shared recipient key material of the recipient signer nodes may be for verifying ownership by the sender of the crypto-asset being transferred, e.g., may be for verifying that the sender signer nodes together have access to the combined pre-shared sender key material. The recipient key material may correspond to the sender key material and may accordingly be shared between multiple crypto-assets of the sender.

In order to verify the authenticity of the transaction message representing the digital transaction, the sender signer nodes may jointly determine a designated verifier threshold signature on the transaction message. The designated verifier threshold signature may allow the one or more recipient signer nodes to jointly verify the authenticity of the transaction message with respect to the pre-shared recipient key material. To this end, the designated verifier threshold signature may be sent by the sender signer nodes to the recipient signer nodes, who may use the designated verifier threshold signature to jointly verify the authenticity of the transaction message with respect to the pre-shared recipient key material.

Interestingly, the inventors realized that, in the context of performing a digital transaction, its authenticity may be securely verified if the designated verifier threshold signature satisfies a number of properties. In particular, the pre-shared sender key material of a single sender signer node may be such that it does not allow to determine the designated verifier threshold signature. Moreover, the pre-shared recipient key material of a single recipient signer node may be such that it does not allow to verify the authenticity. Also, the combined pre-shared recipient key material may be such that it does not allow to determine the designated verifier threshold signature. Interestingly, by distributing key material both on the side of the sender and on the side of the verifier, the single point of failure on private keys may be eliminated both on the sender and the recipient side. Such a designated verifier threshold signature can for example be implemented based on Diffie-Hellman, as discussed in more detail elsewhere.

In particular, if the combined sender and recipient key material would for example be the same or derivable from each other, this would introduce the possibility that the recipient holds the sender's private key material. As such, a malicious recipient may perform a transaction on behalf of the sender without their consent, and consequently for example steal funds associated to the sender's private key material. The recipient key material may not allow to perform a transaction on behalf of the sender. Consequently, by defining the sender key material such that it cannot be derived from the recipient key material, e.g., by including a cryptographic key in the sender key material that is not included in the recipient key material, this may be remedied. The verification may then be performed jointly with the recipient, e.g., the recipient signer nodes may receive the designated verifier threshold signature off-chain and verify it.

The use of designated verifier threshold signatures allows transactions on distributed ledgers to be performed more securely. In particular, the key material that secures crypto-assets may be stored more securely in a crypto-wallet, for example with increased protection against loss as also discussed elsewhere. Still, the designated verifier threshold signature may allow transactions in terms of these crypto-assets to be carried out in a secure way. In particular, by using designated verifier threshold signatures, it is not necessary to rely on public addresses to verify the transaction, thereby reducing the risk of public-key substitution attacks. In particular, by sending the designated verifier threshold signature off-chain and basing it on sender and recipient key material that is not included in the transaction message, user public addresses may be protected, and it may be ensured that known public-key substitution attacks no longer apply. In particular, the proposed designated verifier threshold signature-based system may provide the following advantages:

Native whitelisting via a private wallet. Since verifying a transaction may be based on pre-shared sender and recipient key material, effectively, the sender and verifier may authenticate to each other using a common secret. Compared to prior art transaction systems that use a public key as deposit address, the system may use pre-shared key material, and in particular, third parties that have not pre-shared key material, may not be able to perform transactions with the receiver. This can avoid a number of threats and problems that may be caused by a receiver being unable to select with which parties to perform transactions, such as wiring money to a wallet, e.g. that of a political party, and then accusing the owner of receiving illegal funds; or, on the contrary, having a drug dealer claim that the police, attempted to frame him by wiring money into his wallet and accuse him that this fund transfer is illegal.

Risk-free delivery (proof of delivery): Contrary to a wallet based on TSS, third parties without the recipient key material may not be able to verify a transaction with the sender. This can help to avoid wiring and framing. In particular, a transaction message may include an identifier of the recipient, e.g., a public key of the recipient which, when hashed, may yield a destination address D of the receiver. The transaction message may further comprise the designated verifier threshold signature to prove ownership of private key corresponding to the provided public key. The transaction may be is valid if the signature on the designated public key is valid.

Security under corrupted parties. The determining and/or the verifying may be performed in a robust way. Accordingly, the determining and/or verifying may succeed even if a malicious sender or recipient signer node attempts to manipulate the process, e.g., by creating intentionally invalid signatures or the like. For example, such robustness may be ensured up to a threshold number of corruptions, e.g., at most 1 sender signer node and/or at most 1 recipient signer node, at most 2 sender signer nodes and/or at most 2 recipient signer nodes, etc. Accordingly, it may be enabled that legitimate transactions are signed and pass through even in the face of an attacker who may gain illegitimate control over sender and/or recipient signer nodes.

Eliminating single point of failure at the sender and verifier sides. The pre-shared sender key material may be distributed in such a way that no single sender signer node, nor any of the recipient signer nodes, has access to the combined sender key material. In some embodiments, even when the key material is generated, it is not available at a single place at any point in time, e.g., the key material of respective parties may be generated jointly using a distributed protocol, e.g., based on multi-party computation (MPC). Also to perform the transaction, the nodes may not need to exchange their respective key material, e.g., because no public key is comprised in the transaction message against which the transaction is verified. Accordingly, no sender or recipient signer node by itself may hold sufficient information to perform the transaction by itself. The same may be true for the verifier key material as well. This characteristic may also be referred to as the keylessness of the system. Keylessness is preferable because it helps to eliminates many vulnerabilities stemming from key generation, key distribution, key storage, and key destruction.

Secure signature generation. The designated verifier threshold signature may be generated based on respective sender signer nodes using their respective pre-shared sender key material without the need for the sender signer nodes to exchange this key material, and without this key material being derivable from the protocol used to generate the designated verifier threshold signature. While performing the transaction, the sender key share may not need to be accessed by or presented to any other entity in order to generate the designated verifier threshold signature, so that the respective sender key material does not need to leave the respective sender signer node.

The authentication may be carried out by multiple sender signer nodes, for example, at least two sender signer nodes, at least three sender signer nodes, or at least five sender signer nodes. There are typically also multiple recipient signer nodes, e.g., at least two recipient signer nodes, at least three recipient signer nodes, or at least five recipient signer nodes. Having multiple nodes may provide improved security for the party, e.g., sender or recipient, represented by the nodes, and may accordingly also provide improved assurance to the other party that the performed transaction is legitimate. The multiple nodes representing the sender or recipient may or may not be operated by different parties. Having different parties may improve security also in an organizational sense, for example against insider attacks, while in either case, having multiple nodes may improve resilience against outsider attacks.

The sender and recipient key material may be pre-shared in the sense that it is already available to the respective sender and recipient signer nodes before the transaction is initiated. As also discussed elsewhere, the key material may be obtained by the sender and recipient signer nodes in various ways, e.g., by performing a distributed key material generation protocol between the nodes, using multi-party computation or other distributed techniques; or by obtaining the key material from a trusted third party.

Optionally, the transaction message does not comprise a public key of the recipient of the transaction, or in any case, ownership of the digital asset is not defined based on verifying ownership of the private key corresponding to a public key included in the transaction message. Instead, pre-shared sender and recipient key material may be used in a designated verifier threshold signature that is exchanged off-chain. This may avoid attacks related to public key substitution and framing of a different sender than the actual sender.

Optionally, the pre-shared recipient key material of the one or more recipient signer nodes is not known to any of the individual sender or recipient signer nodes and is not comprised in the transaction message. This way, the verification may be defined in such a way that only the recipient signer nodes, who jointly have access to this key material, can perform it. For example, the transaction message may comprise identifiers of the sender and the recipient of the transaction, and an identifier of a digital asset to be transferred from the sender to the recipient. Thus, a native whitelisting functionality may be provided.

Optionally, the system comprises multiple sender signer nodes, with the respective pre-shared sender key material of the respective sender signer nodes comprising respective shares of a signing private key of a digital signature scheme. The multiple sender signer nodes may determine the designated verifier threshold signature by jointly generating a digital signature using the signing key. A suitable cryptographic assumption for the digital signature scheme can be a Diffie-Hellman cryptographic assumption (e.g., a DH or DDH assumption), for example.

To implement the designated verifier threshold signature at the recipient, several options are available.

One option is to use a designated verifier threshold signature that is based on a designated-verifier digital signature scheme. The respective pre-shared recipient key material may comprise respective secret-shares of a verifier private key according to the designated-verifier digital signature scheme. By performing the verification by the designated verifier in a distributed way, a designated verifier threshold signature can be obtained.

In particular, in one construction, the designated verifier threshold signature may comprise a hash value and a shared secret value. The hash value may be based on the transaction message and a random value. The shared-secret value may be based on a shared secret according to the signer and verifier keys and based on the hash value, with the shared secret being blinded with the random value. Designated verifier signatures using hash values and shared-secret values are known per se, but in a known scheme, the shared secret is blinded with a concatenation of the transaction message and the random value, not just with the random value itself. This may mean that an encoding mapping arbitrary unbounded binary strings to a bounded group may be needed, which moreover may need to be revertible to reconstruct the original message from the group. This may be undesirable if the message is a transaction message, which can be large. Accordingly, the inventors interestingly envisaged to blind the shared secret with the random value without the transaction message, thus eliminating the abovementioned problems.

Moreover, the inventors realized that such a designated verifier threshold signature based on a hash value and a shared secret value can be jointly determined and verified in an efficient way. In particular, the signature may be jointly determined by jointly randomly generating the random value, and generating respective secret-shares of the shared-secret value based on the respective secret-shares of the signer private key. The signature may be jointly verified by generating respective secret-shares of the shared secret based on the respective secret-shares of the verifier private key.

Another way of implementing the designated verifier threshold signature at the recipient, is for the respective pre-shared recipient key material of the recipient signer nodes to comprise respective shares of a public key, i.e., verification key, corresponding to the secret key, i.e., signing key, that is used by the sender signer nodes. In particular, the sender signer nodes may jointly determine the designated verifier threshold signature by generating respective secret-shares of the designated verifier threshold signature based on the respective secret-shares of the signer private key. The recipient signer nodes may jointly verify authenticity of the transaction message by generating respective secret-shares of the designated verifier threshold signature based on the respective secret-shares of the public.

Optionally, the system provided herein may comprise a key generation device configured to generated the pre-shared sender and recipient key material. The key generation device may be operated by a trusted third party. In some cases, for example in the case of RSA signatures, a key generation device may be able to generate such key material much more efficiently than if the sender and/or recipient signer nodes generate the key material among themselves using a distributed protocol. The use of such a distributed protocol is however preferred from a security point of view and can in various cases, in particular using EcDSA signatures, be very efficient. In such cases, a separate trusted key generation device is not needed.

The system may further make use of a co-message authentication code (Co-MAC), also referred to as a "joint MAC". The Co-MAC may be determined by one or more of the recipient signer nodes (e.g., all of them or a subset), acting as MAC-sender node(s), and may be sent, separately from the distributed ledger or in other words off-chain, from the one or more recipient signer nodes to one or more of the sender signer nodes (e.g., all of them or a subset), acting as MAC-recipient nodes. The Co-MAC may be determined from a further transaction message and from pre-shared MAC-sender key material of the MAC-sender. The further transaction message may identify the recipient of the digital transaction, e.g., by including the deposit address of the recipient. The Co-MAC may be such that it allows the MAC-recipient node(s) to verify authenticity of the further transaction message with respect to the further pre-shared MAC-recipient key material, e.g., the Co-MAC can be used to let the recipient signer nodes(s) of the digital transaction provide secure authentication of the deposit address to the sender signer node(s) of the digital transaction.

In particular, based on the further pre-shared MAC-recipient key material, it may be verified that the Co-MAC was determined using the further transaction message by parties having access to the further MAC-sender key material. The further transaction message may indicate the address of the MAC-sender node, being the recipient of the digital transaction, and accordingly may serve as confirmation that the MAC-sender intends to carry out the transaction. In other words, the MAC-sender may authenticate at least their deposit address using the Co-MAC. The further MAC-sender key material however typically cannot be derived from the Co-MAC. Concrete examples of Co-MACs that can be used herein are provided throughout this specification.

Optionally, pre-shared MAC-sender key material may be used that comprises a first cryptographic key and a second cryptographic key. The pre-shared MAC-sender key material may comprise the second cryptographic key.

In embodiments with a first and second cryptographic key, there may be only a single MAC-sender node and MAC-recipient node participating in the Co-MAC. This single MAC-sender node may compute the co-message authentication code using the first and second cryptographic key. The MAC-sender node may further compute a witness using the first but not the second cryptographic key, and provide the witness to the MAC-recipient node. The MAC-recipient node may verify the authenticity of the further transaction message by verifying the co-message authentication code with respect to the witness and the second cryptographic key.

Using the provided approach, the further pre-shared MAC-sender key material cannot be derived from the further pre-shared MAC-recipient key material, since the further MAC-sender key material also comprises the first cryptographic key. Moreover, since the witness is provided by the MAC-sender node and used by the MAC-recipient node in the verification, it may be achieved that the MAC-recipient node needs the collaboration of the MAC-sender node to verify the co-message authentication code, thus improving protection against malicious MAC-recipient nodes. At the same time, the witness may commit the MAC-sender node to the further transaction message, e.g., the witness may be such that, given the co-message authentication code, the MAC-sender node cannot determine multiple witnesses that verify successfully with respect to multiple different further transaction messages. For example, the co-message authentication may comprise a hash based on the witness, or the like. This way, it may be prevented that the MAC-sender node changes the contents of the further transaction message, e.g., the address, while the digital transaction is being performed.

Optionally, the first cryptographic key and the second cryptographic key may comprise respective keys of a message authentication code. The witness may comprise a first message authentication code of the transaction message with the first cryptographic key. The co-message authentication code may comprise a second message authentication code of the first message authentication code with the second cryptographic key. In this example, the Co-MAC concept may accordingly be implemented based on the security of a message authentication code (MAC), for example, HMAC-SHA or another known MAC.

Optionally, the first cryptographic key and the second cryptographic key may comprise respective additive shares of an RSA signing key. The co-message authentication code may be based on a first RSA signature of the transaction message with the RSA signing key. The witness may comprise a second RSA signature of the transaction message with the first cryptographic key. This way, the Co-MAC concept, in which the MAC-sender is needed by the MAC-recipient to perform the verification, may be implemented relying on the security of the well-known RSA signature scheme.

Optionally, the co-message authentication code may comprise a cryptographic hash based on at least the first and second RSA signatures. This way, the co-message authentication protocol may be hardened against a posteriori manipulations by the MAC-sender node, since the MAC-sender node cannot manipulate the first and second signatures after providing the co-message authentication code.

Another way of implementing the Co-MAC, is to let the multiple MAC-sender nodes determining the co-message authentication code by hashing the jointly generated digital signature. The digital signature may be sent from the multiple MAC-sender nodes to a MAC-recipient node as a witness for the co-message authentication code. The MAC-recipient node may verify the digital signature as well as verify that the co-message authentication code is a hash of the digital signature. It is also possible in this example to use multiple MAC-recipient nodes that for example each respectively perform the verification, or that perform the verification in a distributed way. By letting the MAC-sender nodes provide a witness, it may be achieved that the MAC-recipient node(s) need the collaboration of the MAC-sender nodes to verify the co-message authentication code, and moreover, it may be achieved that the MAC-sender nodes effectively commit to the used transaction data so that they cannot modify the transaction data during the course of the transaction. At the same time, the MAC-recipient nodes do not need access to a pre-shared private key and so can use MAC-recipient key material from which the MAC-sender key material cannot be derived, improving security against malicious recipients.

Embodiments are also possible in which there are multiple MAC-sender nodes and/or multiple MAC-recipient nodes participating in the Co-MAC. This is also referred to as a Co-TMAC. The computation of the co-message authentication code and/or the witness may be performed in a distributed way, e.g., using multi-party computation or the like. In particular, the MAC-sender nodes may perform a distributed signing according to an RSA signature scheme by computing respective signature shares, and the MAC-recipient nodes may perform a distributed signature verification of the RSA signature scheme by computing respective verification shares. The multiple MAC-recipient nodes can also each perform the same verification.

It will be appreciated by those skilled in the art that two or more of the above-mentioned embodiments, implementations, and/or optional aspects of the invention may be combined in any way deemed useful.

Modifications and variations of any computer-implemented method and/or any computer readable medium, which correspond to the described modifications and variations of a corresponding system, can be carried out by a person skilled in the art on the basis of the present description.

## BRIEF DESCRIPTION OF THE DRAWINGS

These and other aspects of the invention will be apparent from and elucidated further with reference to the embodiments described by way of example in the following description and with reference to the accompanying drawings, in which:

Fig. 1 shows a sender signer node;
Fig. 2 shows a recipient signer node;
Fig. 3 shows a system for verifying authenticity of a digital transaction;
Fig. 4a shows a detailed example of transaction using a Co-MAC;
Fig. 4b shows a detailed example of a transaction using a Co-MAC;
Fig. 4c shows a detailed example of a transaction using a Co-MAC;
Fig. 4d shows a detailed example of a transaction using a Co-TMAC;
Fig. 5b shows a detailed example of a transaction using a DVTS;
Fig. 6 shows a computer-implemented method of participating as a sender signer node in a transaction;
Fig. 7 shows a computer-implemented method of participating as a recipient signer node in a transaction;
Fig. 8 shows a computer-readable medium comprising data.

It should be noted that the figures are purely diagrammatic and not drawn to scale. In the figures, elements which correspond to elements already described may have the same reference numerals.

## DETAILED DESCRIPTION OF EMBODIMENTS

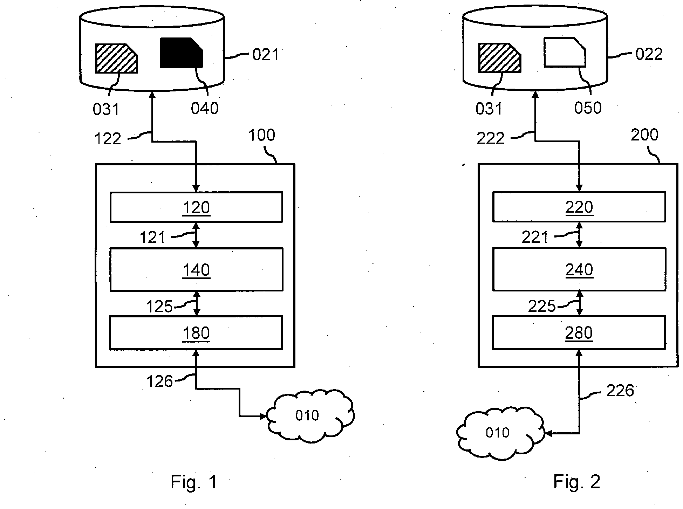

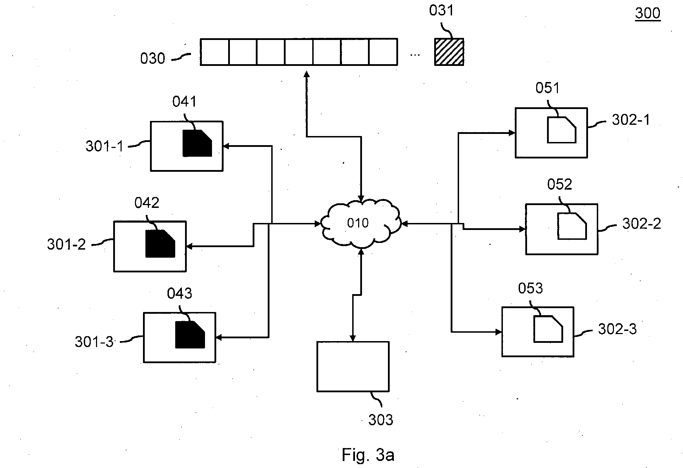

Fig. 1 shows a sender signer node system 100, referred to herein as a "sender signer node". Sender signer node 100 may be for use in a verification system as described herein, e.g., verification system 300 of Fig. 3. The verification system may comprise multiple sender signer nodes. The multiple sender signer nodes may comprise the sender signer node 100. The verification system may further comprise multiple recipient signer nodes. Respective sender signer nodes, including server node 100, may have access to respective pre-shared sender key material 040. Respective recipient signer nodes have access to respective pre-shared recipient key material.

Sender signer node 100 may comprise a data interface 120 for accessing the pre-shared sender key material 040 of the sender signer node. Data interface 120 may further be for accessing the transaction message 031. For example, as also illustrated in Fig. 1, the data interface 120 may be constituted by a data storage interface 120 which may access the data 031, 040 from a data storage 021. For example, the data storage interface 120 may be a memory interface or a persistent storage interface, e.g., a hard disk or an SSD

interface, but also a personal, local or wide area network interface such as a Bluetooth, Zigbee or Wi-Fi interface or an ethernet or fibreoptic interface. The data storage 021 may be an internal data storage of the system 100, such as a hard drive or SSD, but also an external data storage, e.g., a network-accessible data storage. In some embodiments, the data 031, 040 may each be accessed from a different data storage, e.g., via a different subsystem of the data storage interface 120. Each subsystem may be of a type as is described above for the data storage interface 120.

The sender signer node 100 may also comprise a communication interface 180 configured for communication 126 with other systems, e.g., other sender signer nodes and/or recipient signer nodes of the transaction system, and/or for accessing the distributed ledger. Communication interface 180 may internally communicate with processor subsystem 140 via data communication 125. Communication interface 180 may be arranged for direct communication with the other system 200, e.g., using USB, IEEE 1394, or similar interfaces. As illustrated in the figure, communication interface 180 may also communicate over a computer network 010, for example, a wireless personal area network, an internet, an intranet, a LAN, a WLAN, etc. E.g., communication interface 180 may comprise a connector, e.g., a wireless connector, an Ethernet connector, a Wi-Fi, 4G or 4G antenna, a ZigBee chip, etc., as appropriate for the computer network. Communication interface 180 may also be an internal communication interface, e.g., a bus, an API, a storage interface, etc.

The sender signer node 100 may further comprise a processor subsystem 140 which may be configured to, during operation of the sender signer node 100 and jointly with the other sender signer nodes, determine a designated verifier threshold signature on the transaction message 031. The designated verifier threshold signature may allow the one or more recipient signer nodes to jointly verify the authenticity of the transaction message with respect to the pre-shared recipient key material. The pre-shared sender key material 040 of the sender signer node 100 may not allow to determine the designated verifier threshold signature.

**Fig. 2** shows a recipient signer node system 200, referred to herein as a "recipient signer node". Recipient signer node 200 may be for use in a verification system as described herein, e.g., verification system 300 of Fig. 3. The verification system may comprise multiple sender signer nodes and multiple recipient signer nodes. The multiple recipient signer nodes may comprise the recipient signer node 200. Respective sender signer nodes may have access to respective pre-shared sender key material. Respective recipient signer nodes, including recipient signer node 200, may have access to respective pre-shared recipient key material 050.

The recipient signer node 200 may comprise a data interface 220 for accessing the pre-shared recipient key material 050 of the recipient signer node. Data interface 220 may be further for accessing the transaction message 031. For example, as also illustrated in Fig. 2, the data interface may be constituted by a data storage interface 220 which may access the data 031, 050 from a data storage 022. In general, the data interface 220 and the data storage 022 may be of a same type as described with reference to Fig. 1 for the data interface 120 and the data storage 021.

The recipient signer node 200 may further comprise a communication interface 280 arranged for digital communication with the sender signer nodes and/or the recipient signer nodes, and/or for accessing the distributed ledger. In general, the communication interface 280 may be of a same type as described with reference to Fig. 1 for the communication interface 180. In particular, as illustrated in the figure, communication interface 280 may be for communication over a computer network 010, e.g., the internet.

The system 200 may further comprise a processor subsystem 240 which may be configured to, during operation of the system 200, obtain a designated verifier threshold signature, and use the designated verifier threshold signature to, jointly with the multiple recipient signer nodes, verify the authenticity of the transaction message 031 with respect to the pre-shared recipient key material 050. The pre-shared recipient key material 050 of the recipient signer node by itself may not allow to verify the authenticity. The combined pre-shared recipient key material may not allow to determine the designated verifier threshold signature

It will be appreciated that the same considerations and implementation options apply for the processor subsystem 240 as for the processor subsystem 140 of Fig. 1. It will be further appreciated that the same considerations and implementation options may in general apply to the system 200 as for the system 100 of Fig. 1, unless otherwise noted.

In general, each system described in this specification, including but not limited to the system 100 of Fig. 1 and the system 200 of Fig. 2, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers.

**Fig. 3** shows an authentication system 300 for verifying authenticity of a transaction message 031 representing a digital transaction.

The digital transaction may be performed using a distributed ledger 030. The distributed ledger may be distributed across multiple nodes, for example, in a peer-to-peer fashion. The multiple nodes are preferably operated by multiple different organizations. The distributed ledger may allow transaction messages to be posted and may provide a consensus mechanism providing a well-defined set of transactions that have been successfully posted. For example, the distributed ledger 030 may be a private or public blockchain, e.g., based on proof-of-work, proof-of-stake, or another consensus method. The transaction may be performed using a layer 2 protocol of the distributed ledger 030, for example, at a sidechain such as a state channel network.

The transaction may be performed by posting a transaction message 031 on the distributed ledger 030. The transaction may be from a sender to a recipient, e.g., may represent a transfer of a digital asset from the sender to the recipient. The transaction message 031 may be posted on the distributed ledger 030 by one or more sender signer nodes representing the sender and one more recipient signer nodes representing the recipient, e.g., after the transaction has been verified as described herein, e.g., when committing the state of a sidechain to the mainchain.

Transaction message 031 may comprise an identifier of a recipient of the transaction. This identifier is typically not related to the pre-shared sender and recipient key material used to authenticate the transaction as described herein. Transaction message 031 typically also comprises an identifier of the sender, which, as for the recipient, is typically not related to the pre-shared sender and recipient key material; and an identifier of a digital asset to be transferred from the sender to the recipient, for example, a certain amount of bitcoin or ether, a non-fungible token, etc.

The transaction system 300 may comprise multiple sender signer nodes. The sender signer nodes may perform the transaction on behalf of the sender. As an illustration, three sender signer nodes 301-1, 301-2, 301-3 are shown. The respective sender signer nodes may have access to respective pre-shared sender key material 041, 042, 043. The respective pre-shared sender key material may together form overall sender key material. The overall sender key material may not be derivable from the respective key material 041, 042, 043 of any individual sender signer node 301-1, 301-2, 301-3. For example, the sender key material may be distributed in such a way that any $t$ out of $n$ sender signer nodes can derive the overall sender key material from their respective key material. The number of sender signer nodes may be at least 2, at least 3, or at least 5. The threshold for deriving the key material can be equal to the number of sender signer nodes or lower, e.g., at least 2, at least 3, or at least 5. In particular, the number of sender signer nodes $n$ and the threshold $t$ may be $(n = 3, t = 2)$, $(n = 5, t = 3)$, or more generally, $(n = 2t - 1, t)$ for an integer $t$. These parameter sets in some embodiments allow efficient implementations of the distributed cryptographic protocols described herein.

The transaction system 300 may further comprise multiple recipient signer nodes. The recipient signer nodes may perform the transaction on behalf of the recipient. As an illustration, three recipient signer nodes 302-1, 301-2, 301-3 are shown. The respective recipient signer nodes may have access to respective pre-shared recipient key material 051, 052, 053. The respective pre-shared recipient key material may together form overall recipient key material. In some embodiments, the overall recipient key material is not derivable from the respective key material 051, 052, 053 of any individual recipient signer node 302-1, 302-2, 302-3, e.g., the respective key material of a threshold number of recipient signer nodes may be needed to derive the overall recipient key material, with the same possibilities for the number of parties and the threshold as given for the sender signer nodes above. The combined pre-shared sender key material typically cannot be derived from the combined pre-shared recipient key material, e.g., given key material 051, 052, and 053, it is not cryptographically feasible to derive key material 041, 042, 043 or to derive the overall key material that is obtained from combining it and that allows the designated verifier threshold signature to be determined.

Typically, the sender and recipient signer nodes 301-1, 301-2, 301-3, 302-1, 302-2, 302-3 are all mutually distinct devices or systems, e.g., operated by different organizations.

Generally, an owner of crypto-assets, e.g., an amount of cryptocurrency, may use a custodial wallet or a non-custodial wallet (also known as a personal wallet) to store the assets. With a non-custodial wallet, the owners themselves may manage the key material that proves ownership of the crypto-asset. While there is no need to trust a third party when using a non-custodial wallet, this also means that the user is responsible for managing the key material and accordingly needs to take precautions to protect his funds.

When the sender signer nodes and/or recipient signer nodes provide a custodial wallet, they may be operated by one or more third parties that control the key material that proves ownership of crypto-assets. Accordingly, the sender or recipient may trust the third parties to secure their assets and return them if they want to for example trade or send them somewhere else. While a custodial wallet lessens personal responsibility, it requires trust in the custodian holding the user's fund.

In transaction system 300, the sender signer nodes 301-1, 301-2, 301-3 may provide a custodial wallet to the sender. For example, prior to the transaction, the sender signer nodes may jointly manage the asset being transferred on behalf of the sender. The recipient signer nodes 302-1, 302-2, 302-3 may provide a custodial wallet to the recipient. For example, after the transaction has successfully completed, the recipient signer nodes may jointly manage the transferred asset on behalf of the recipient. The nodes providing a custodial wallet may be operated by one or more cryptocurrency exchange platforms, for example. If there is only one sender signer node or only one recipient signer node, this node can also be operated by the owner of the crypto-asset themselves as a non-custodial wallet.

Further shown is a computer network 010 that may be used for communication among the various parties, e.g., sender signer nodes 301-i, recipient signer nodes 302-i, key generation device 303, and/or nodes operating the distributed ledger 030. For example, the computer network 010 may be the internet.

The sender signer nodes 301-i and recipient signer nodes 302-i may be configured to verify the transaction represented by the transaction message 031. To this end, at the sender signer nodes 301-i, a designated verifier threshold signature may be jointly determined on the transaction message 031. The designated verifier threshold signature may allow the one or more recipient signer nodes to jointly verify the authenticity of the transaction message with respect to the pre-shared recipient key material 051-053. The pre-shared sender key material 041-043 of a single sender signer node 301-I may not allow to determine the designated verifier threshold signature. The signature may be sent from the one or more sender signer nodes 301-i to the one or more recipient signer nodes 302-i. The sending may be performed off-chain, e.g., separately from the distributed ledger 030. For example, one particular sender signer node, e.g., node 301-1, may send the signature to each of the recipient signer nodes; the sender signer node 301-1 may send the signature to one particular recipient signer node, e.g., recipient signer node 302-2, etc, respective sender signer nodes may send secret-shares of the signature to one or more recipient signer nodes, etc. At the one or more recipient signer nodes 302-i, the designated verifier threshold signature may be used to jointly verify the authenticity of the transaction message 031 with respect to the pre-shared recipient key material 051-053. The pre-shared recipient key material 051-053 of a single recipient signer node may not allow to verify the authenticity. The combined pre-shared recipient key material 051-053 may not allow to determine the designated verifier threshold signature.

Interestingly, the use of a designated verifier threshold signature in system 300 may provide improved security compared to prior art transaction systems. In the presented transaction system 300, transaction message 031 may not comprise the public key of the recipient used for the authentication, but instead a different identifier of the recipient. Through using the signature, the authentication of the transaction message may be performed jointly between sender signer nodes holding pre-shared sender key material, and recipients holding pre-shared recipient key material.

Moreover, the pre-shared sender key material may be defined such that it cannot be derived from the pre-shared recipient key material, e.g., based on the pre-shared recipient key material 051-053 it may not be possible to determine a signature on behalf of the senders, e.g., that would successfully verify with respect to the pre-shared recipient key material 051-053. This improves on systems where the joint sender key material and the joint recipient key material is the same, as would be the case when using a TMAC exchange protocol, for example. Such latter systems may run a risk that the recipient hold the sender's private key. It is in the interest of a malicious recipient to sign on behalf of the sender without his consent, and consequently for example steal funds associated to the private key. This may be avoided by using a signature with sender key material that cannot be derived from the recipient key material, with verification being performed jointly with parties holding the pre-shared sender key material.

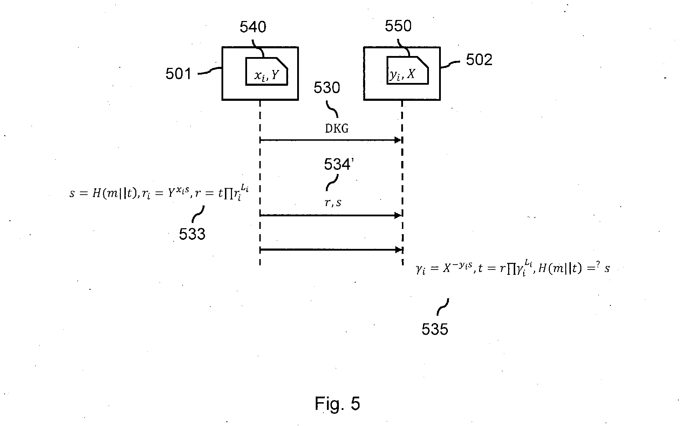

Concerning the exact form of the signature and the associated sender key material 041-043 and recipient key material 051-053, several options are available. Examples are given with respect to Fig. 5. The combined pre-shared recipient key material 051-053 of the one or more recipient nodes 302-1, 302-2, 302-3 may be unknown to any of the individual sender nodes 301-1, 301-2, 301-3 or recipient nodes 302-1, 302-2, 302-3, and may not be comprised in the transaction message or the co-message authentication node itself. This is advantageous compared e.g. to the recipient nodes all having common recipient key material because this privacy-sensitive material is better protected, e.g., it is harder to trace transactions to the user.

As shown in the figure, the transaction system 300 may further comprise a key generation device 303. Key generation device 303 may be configured to generate the pre-shared sender key material 041-043 and recipient key material 051-053. Key generation device 303 may be implemented using a data interface, a processor subsystem, and a communication interface as discussed with respect to Fig. 1 or Fig. 2. An advantage of having a key generation device 303 is that the key material can be generated efficiently. A disadvantage is that security relies on the key generation device 303 correctly generating the key material and keeping it secret, e.g., to erase it after having distributed the key material among the parties. Instead of having a key generation device, the key material 041-043, 051-053 may also be generated by a distributed protocol among at least the sender signer nodes 041-043, for example, based on multi-party computation; examples are given elsewhere.

In particular, the transaction may be performed using may be a so-called layer 2 protocol of a blockchain. For example, the transaction may be posted at a sidechain, e.g., a state channel network associated with distributed ledger 030. In this context, a custodial tool may be provided that protects private keys against loss and designates a specific verifier to spend funds.

Contrary to a wallet based on TSS, third parties without the recipient key material may not be able to verify a transaction with the sender. This can avoid a number of threats and problems such as wiring money to a wallet, e.g. that of a political party, and then accusing the owner of receiving illegal funds, or on the contrary, having a drug dealer claim that the police, attempted to frame him by wiring money into his wallet and accuse him that this fund transfer is illegal.

The transaction message 031 may include an identifier of the recipient, e.g., a public key of the recipient which, when hashed, may yield a destination address D of the receiver. The transaction message may further comprise a signature to prove joint ownership of the private key corresponding to the public key just provided. A transaction may be valid if the signature on the designated public key is valid.

Interestingly, the techniques provided herein may be combined with a co-message authentication code (Co-MAC), examples of which are provided herein. One or more of the recipient nodes 301-i may be configured to determine a co-message authentication code from at least a further transaction message associated to the digital transaction, and from pre-shared MAC-sender key material of the one or more recipient nodes (not shown). One or more of the sender nodes 302-I may be configured to verify the co-message authentication code with respect to pre-shared MAC-recipient key material (not shown). The further transaction message may identify the recipient and may accordingly be used authenticate the address of the recipient of the digital transaction.

The Co-MAC may be used as follows. Before performing transaction 031, the receiver of the funds may authenticate the deposit address using a common secret. For example, to authenticate a recipient's address, the recipient may split the private key into two parts $(sk_a, sk_b)$, then only sends the second part to the sender. Given an address, the identity of the sender and recipient, their respective private keys ($sk_a$, $sk_b$), the recipient may compute $\tau$ = MAC(*a, b, address, $sk_a$, $sk_b$*) and send $\tau$ to the sender. Later on, when the sender wants to perform a transaction to the recipient, the recipient may send the witness w = u(*a, b, m, $sk_a$, $sk_b$*) to the sender, where only the sender may be convinced whether the authenticated address $\tau$ is valid or not. Examples of Co-(T)MACs are provided herein.

Accordingly, the Co-MAC may function as an authentication tool to protect addresses from modification. In particular, it may provide the following advantages: - Native Whitelisting, in particular, authenticity of addresses from the stated sender. By using the Co-MAC, it may be ensured that the address has not been accidentally or deliberately corrupted. One party (in this case, the recipient of the transaction) may send an address to another party (in this case, the sender of the transaction) in such a way that if the address is modified on its way, the other party is likely to detect such an alteration. Accordingly, the Co-MACs effectively provides data-origin authentication to verify that a message has been originated by a particular entity, in other words, from the stated sender. - Protecting the sender's private key from the recipient's misuse (with the sender in this case being the recipient of the digital transaction providing their deposit address, and the recipient being the sender of the transaction). The inventors realized that MAC exchange protocols have possibility that the recipient holds the sender's private key. Indeed, it is in the interest of a malicious recipient to authenticate an address on behalf of the sender without consent, and for example steal funds associated to the private key. To avoid this, the proposed construction may avoid sharing the private key with the recipient. Instead, the "Co-MAC", or joint mac, provides a verification procedure that is done jointly between the sender and receiver via the Co-MAC.

Some general information on embodiments using a Co-MAC is now provided.

Some embodiments herein are motivated by the following observation. Using alternative techniques, such as a TMAC exchange protocol, there is a possibility that the recipient holds the sender's private key. It may be noted that it is in the interest of a malicious recipient to sign on behalf of the sender without his consent, and consequently steal all his funds associated to his private key. Accordingly, it is desirable to avoid sharing the private key of the sender nodes with the recipient. Various embodiments avoid this by using a co-threshold message authentication code ("Co-TMAC", or "joint MAC"), wherein verification may be performed by the MAC-recipient nodes, holding pre-shared recipient key material, jointly with the MAC-sender nodes, holding pre-shared sender key material in such a way that the pre-shared sender key cannot be derived from the pre-shared recipient key material.

Various embodiments described herein make use of digital signatures. Generally, a digital signature is a cryptographic scheme for verifying authenticity of a digital message. As is well known per se, a digital signature scheme may be defined mathematically as a tuple of probabilistic polynomial-time (PPT) algorithms DS = (*KeyGen,* Sign, Ver), such that:

- *KeyGen*($1^\lambda$) takes as input public parameters $1^\lambda$ and outputs a pair (*sk, pk*) representing a public key (also referred to as the verification key, or signature verification key) and a private key (also referred to as the signing key);
- Sign(*sk, m*) takes as input a message *m* from a specified message space *M,* a secret key *sk,* and the public parameters pp. It outputs a possibly randomized signature

$$\sigma \overset{\$}{\leftarrow} \mathrm{Sign}(sk, m, \mathrm{pp}).$$

- Ver(*pk*, $\sigma$, *m*) is a, typically deterministic, verification algorithm taking as input a message *m*, a signature $\sigma$, a public key *pk,* and the public parameters pp. Ver outputs a bit *b* = 1 iff the signature is valid and *b* = 0 iff not.

Various embodiments also relate to the use of a threshold signature scheme. Generally, a threshold signature scheme allows to generate a digital signature by means of a distributed protocol between multiple signers. Consider a digital signature scheme DS. Mathematically, a (*t, n*)-Threshold Signature Scheme (TSS) may be defined as a triple of algorithms *TSS. KeyGen, TSS.* Sign, *TSS.* Ver where *TSS.* Ver = DS. Ver. *TSS* may for example distribute the signing capacity amongst *n* signers, $\mathcal{P}_1, \cdots, \mathcal{P}_n$ such that any quorum of at least *t* + 1 of the $\mathcal{P}_i$s can jointly generate a signature, whereas groups of size *t* (or fewer) cannot. Such a *TSS* may be formally defined as comprising the following sub-protocols:

- *TSS. KeyGen:* is a distributed key generation protocol requiring any previously shared key material, but only public identities/addresses. Once *TSS. KeyGen* terminates, each $\mathcal{P}_i$ has their own private share $sk_i$ of the secret key *sk*. The public key *pk* is known by all parties. Nobody learns any information about the private key *sk.*

- *TSS.* Sign(*$sk_i$, m, $r_i$*): is an interactive protocol run by a subset of the $\mathcal{P}_i$s, where the input of each $\mathcal{P}_i$ is a message *m*, randomness $r_i$ and the player's private input $sk_i$. The protocol returns a valid signature $\sigma$ on *m*. This signature is such that DS. Ver(*pk*, $\sigma$, *m*) = Accept.

Various embodiments also relate to the use of message authentication codes (MACs), and in particular threshold message authentication codes (TMACs) for securing crypto-wallets.

Generally, in cryptography, Message Authentication Codes (MACs) may be used to ensure that data has not been accidentally or deliberately corrupted. A MAC may allow one party (the sender) to send a message to another party (the receiver) in such a way that if the message is modified on its way, the receiver can almost certainly detect such an alteration. In this sense, a MAC may provide data-origin authentication.

When using a MAC, it may be assumed that both parties share a symmetric secret key $K$. The sender may compute a value $\tau$, also referred to as MAC or authentication tag, for example $\tau = F_k(m)$ using a keyed hash function $F$. The sender may $\tau$ along with the message $m$. On receipt, the receiver may recompute the MAC value using the received message and the shared secret $K$ and may check that their computation, yielding a value $\tau'$, agrees with the MAC $\tau$ received from the sender. If $\tau = \tau'$, then the message $m$ is authenticated.

In various embodiments, the computation of $\tau$ and/or $\tau'$ may be distributed among a group of MAC-senders or MAC-receivers in such a way that no individual sender or receiver has access to the shared secret $K$. Such a distributed computation of a MAC may be referred to as a threshold MAC (TMAC). In particular, a (t,n)-TMACs may enable any $t$ or more out of $n$ total parties to produce/verify a valid authentication tag while any quorum numbering less then $t$ parties is not able to do so. Threshold MACs are known per se from K. Martin et al., "Threshold MACs", Proceedings ICISC'02.

Various embodiments relate to the use of such TMACs for securing a crypto-wallet. Consider two sets of $n$ parties:

$$S = \{S, \ldots, S_n\} \text{ and } V = \{V_1, \ldots, V_n\}$$

where S denotes senders capable of MACing (producing a tag). $V$ denotes verifiers capable of only checking a tag. A ($t$, $n$)-TMAC may be defined as a system in which any $t$ senders can jointly generate a valid tag for a given message. Any $t$ receivers are able to jointly verify a tag. Mathematically, a ($t$, $n$)-TMAC may be defined as a tuple of algorithms:

- *TMAC.KeyGen*($1^\kappa$): Takes as input a security parameter $\kappa$ (e.g., $\kappa \in \mathbb{N}$ in unary) and outputs each player's private share $sk_i$.
- *TMAC.TM*($sk_i$, $m$): Tag generation (we denote the tag by $\tau$) requires the collaboration of any $t$ of the senders S.
- *TMAC.*Ver($sk_i$, $\tau$): Given a message $m$ and $\tau$, *TMAC.*Ver requires the collaboration of any of $t$ members of $V$ to check the validity of $\tau$ and return either Accept or Reject.

Various embodiments may use an underlying message authentication code that is homomorphic in the key. This may be defined mathematically as follows. Consider the authentication function $F: K \times M \to T$ where $K, M, T$ respectively stand for the key space, the message space and the tag space. The homomorphism may be defined by stating that the following property holds for two operators $\heartsuit, \diamondsuit$:

$$F(k_1 \heartsuit k_2, m) = F(k_1, m) \diamondsuit F(k_2, m).$$

Such a homomorphic authentication function may be used as follows:

- The secret key $K$ may be shared as respective pre-shared key material among multiple senders/and/or recipients using a linear secret sharing scheme, for example an additive secret sharing scheme. See e.g., see A. Shamir, "How to share a secret", Comm. ACM 22(22):612-613, 1979.
- Party $i$ may computes their partial tag: $\tau_i = F(k_i, m)$.
- A linear combination of the $\tau_i$ generated by an authorized subset of parties may be combined into a valid overall authenticated tag $\tau$.

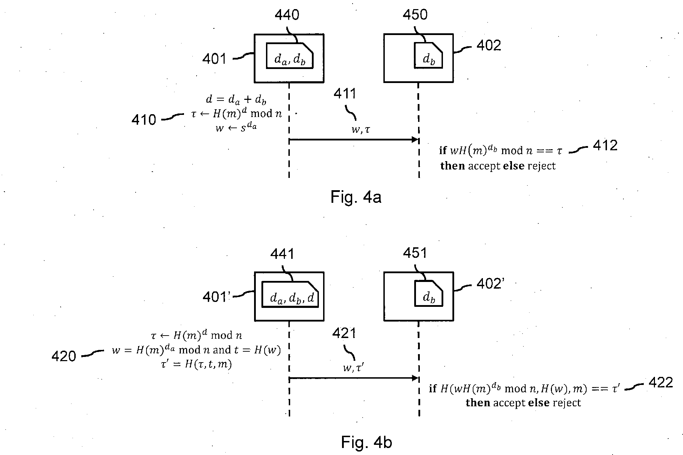

Figs. 4a-4d below provide several concrete ways in which a Co-Message Authentication Code (Co-MAC) may be implemented. The Co-MAC is described as between a MAC-sender node and a MAC-recipient node, using MAC-sender key material and MAC-recipient key material. It is noted that, in a transaction system as in Fig. 3, the MAC-sender is typically one or more of the recipients of the digital transaction, and the MAC-recipient is typically one or more of the senders of the digital transaction. The transaction message being verified in this application may comprise an identifier (e.g., address) of the recipient of the digital transaction, i.e., the MAC-sender. However, the Co-MAC is also applicable more generally between any MAC-sender(s) and MAC-recipient(s).

**Fig. 4a** shows a detailed, yet non-limiting, example of using a Co-MAC. This example shows a single MAC-sender node 401 and a single MAC-recipient node 402.

As shown in the figure, the pre-shared MAC-sender key material 440 may comprise a first cryptographic key $d_a$ and a second cryptographic key $d_b$. The pre-shared MAC-recipient key material 450 may comprise the second cryptographic key $d_b$. MAC-sender node 401 may compute co-message authentication code $\tau$ using the first and second cryptographic key $d_a$, $d_b$, and may further compute a witness $w$ using the first cryptographic key $d_a$ but not the second cryptographic key $d_b$. The Co-MAC $\tau$ and witness $w$ may be provided 411 by the MAC-sender node 401 to the MAC-recipient node 402. The MAC-recipient node may verify the authenticity of the transaction message by verifying the co-message authentication code $\tau$ with respect to the witness $w$ and the second cryptographic key $d_b$.

Effectively, the Co-MAC may enable the MAC-recipient to verify a tag (MAC) with the MAC-sender's help. More precisely, the Co-MAC may enable the MAC-recipient to jointly verify a tag $\tau$ with the MAC-sender on the transaction message $m$ so that $\tau$ convinces a verifier that all the send nodes MAC'ed $m$. The verification algorithm, i.e., the determination and verification of the co-message authentication code, may receive as input the parties' private key material, and the message $m$ and tag $\tau$. The verification algorithm may either accept or reject $\tau$.

Mathematically, a Co-MAC performed between two Co-MACing parties Alice and Bob and using first and second cryptographic keys may be defined as a scheme $\Omega = (KeyGen, CoMAC, Verify)$ comprising the following three algorithms:

- *KeyGen*($1^\kappa$): Upon a security parameter $\kappa$. Outputs $sk = \{sk_a, sk_b\}$. Alice keeps $sk_a$ private and sends $sk_b$ to Bob.
- *CoMAC*: To Co-MAC $m$, Alice computes $\tau = MAC(a, b, m, sk_a, sk_b)$. Here $a$ and $b$ are the identities of Alice and Bob, respectively. Alice sends $\tau$ to Bob.
- *Verify:* To verify $\tau$. Alice sends to Bob a witness $w = u(a, b, m, sk_a, sk_b)$, and Bob computes $g(a, b, m, sk_b, w, \tau)$, it returns either Accept or Reject.

As a particular example, the figure illustrates a Co-MAC built from the RSA signature protocol. In this example, the first cryptographic key $d_a$ and the second cryptographic key $d_b$ may comprise respective additive shares of an RSA signing key $d = d_a + d_b$. The co-message authentication code may be based on a first RSA signature $H(m)^d$ mod $n$ of the transaction message m with the RSA signing key $d$. The witness may comprise a second RSA signature $H(m)^{d_a}$ of the transaction message m with the first cryptographic key $d_a$.

In particular, the verification of the transaction may proceed as follows:

1. The MAC-sender node 401 may generate 410 $sk = d = d_a + d_b$ such that $sk_a = d_a$ is random kept by Alice and $sk_b = d_b = sk - d_a$ is given to Bob.

2. The MAC-sender node may compute 410 Co-TMAC $\tau = CoMAC(m, d) = H(m)^d$ mod $n$.

3. To co-verify $\tau$, the MAC-sender node may compute 410 witness $w = H(m)^{d_a}$ and then send 411 the witness $w$ to the MAC-recipient node 402. To accept or reject, the MAC-recipient node 402 may compare:

$$wH(m)^{d_b} \bmod n == \tau.$$

It may be noted that a validly performed transaction may in this case indeed be successfully verified, because:

$$CoMAC(m, d) == wH(m)^{d_b} == H(m)^{d_a}H(m)^{d_b} == H(m)^{d_a+d_b} == H(m)^d == \tau.$$

Several properties of the above construction may be noted. The pre-shared MAC-sender key material 440 in this example cannot be derived from the pre-shared MAC-recipient key material 450 since it comprises first cryptographic key $d_a$. Moreover, the co-message authentication code $\tau$ allows the one or more recipient signer nodes to verify authenticity of the transaction message with respect to the pre-shared MAC-recipient key material $d_b$, by using the witness $w$. Moreover, the pre-shared MAC-recipient key material 450 does not need to be comprised in the transaction message m.

Although this figure shows a single MAC-sender node 401 and a single MAC-recipient node 402, it is also possible to distribute the MAC-sender and/or MAC-recipient functionality among multiple nodes, thereby further hardening the system. For example, respective MAC-sender nodes may have respective secret shares of the RSA signing key $d$ as pre-shared key material, based on which they may compute the Co-TMAC by RSA threshold exponentiation, as also discussed elsewhere. Similarly, also the exponentiation with the first cryptographic key $d_a$ by the MAC-sender nodes, and/or the exponentiation with the second cryptographic key $d_b$ by the MAC-recipient nodes, may be performed as a threshold exponentiation.

**Fig. 4b** shows a detailed, yet non-limiting, example of a transaction using a Co-MAC. This example is based on the example of Fig. 4a and similarly shows a MAC-sender node 401' and a MAC-recipient node 402' having respective pre-shared key material 441, 451.

This example provides improved protection against a malicious MAC-sender node. It may be noted that, in the system of Fig. 4a, the MAC-sender node may send any witness $w$, the MAC-recipient node cannot check its correctness. Specifically, for a given message $m$ and tag $\tau$, the MAC-sender node may be able to convince the MAC-recipient node that $\tau$ matches $m$ even if it does not, by sending. $w = t \cdot (H(m)^{d_b})^{-1}$ mod $n$. By preventing this, improved protection may be provided against a malicious MAC-sender node, in addition to protecting against a malicious third party as in Fig. 4a.

In this example, as discussed with respect to Fig. 4a, a first cryptographic key $d_a$ and a second cryptographic key $d_b$ are used that comprise respective additive shares of an RSA signing key $d = d_a + d_b$. As above, the co-message authentication code $\tau$ may be based on a first RSA signature $\tau = H(m)^d$ of the transaction message $m$ with the RSA signing key $d$. The witness $w$ may comprise a second RSA signature $w = H(m)^{da}$ mod $n$ of the transaction message $m$ with the first cryptographic key $d_a$. Interestingly, in this example, the verification of the transaction may be hardened against a posteriori manipulations by the MAC-sender node 401', by including in the co-message authentication code a cryptographic hash based on at least the first and second RSA signatures, e.g., $\tau' = H(\tau, t, m)$ where $t = H(w)$.

Accordingly, the Co-MAC may be verified as follows:

1. MAC-sender node 401' generates 420 $sk = d = d_a + d_b$ such that $sk_a = d_a$ is random kept by the MAC-sender node and $sk_b = d_b = sk - d_a$ is given to the MAC-recipient node.
2. The MAC-sender node computes 420 $\tau = CoMAC(m, d) = H(m)^d$ mod $n$, such that $w = H(m)^{da}$ mod $n$ and $t = H(w)$. The tag is now $\tau' = H(\tau, t, m)$.
3. To co-verify $\tau'$, the MAC-sender node 401' sends 421 w to the MAC-recipient node 402'. To accept or reject, the MAC-recipient node 402' compares

$$H(wH(m)^{d_b} \bmod n, H(w), m) == \tau'$$

It may be noted in this example that, after having sent a Co-MAC tag on a given transaction message $m$, the MAC-sender node intends to mislead the MAC-recipient node into thinking that the tag corresponds to a message different than $m$, the MAC-sender node may solve in $x, y$ an equation of the form

$$H(yH'(x) \bmod n, H(y), x) == A$$

which may be assumed to be infeasible according to cryptographic assumptions. Accordingly, protection against a malicious MAC-sender node may be improved.

As for Fig. 4a, it is in principle possible to distribute the functionality of the MAC-sender node 401' among multiple MAC-sender nodes, and/or to distribute the functionality of the MAC-recipient node 402' among multiple MAC-recipient nodes. In particular, the exponentiations with the RSA key $d$ and the shares $d_a$ and $d_b$ of the MAC-sender and MAC-recipient node, respectively, may be performed by RSA threshold exponentiation. By distributing the MAC-sender and/or MAC-recipient functionality, security may be further improved.

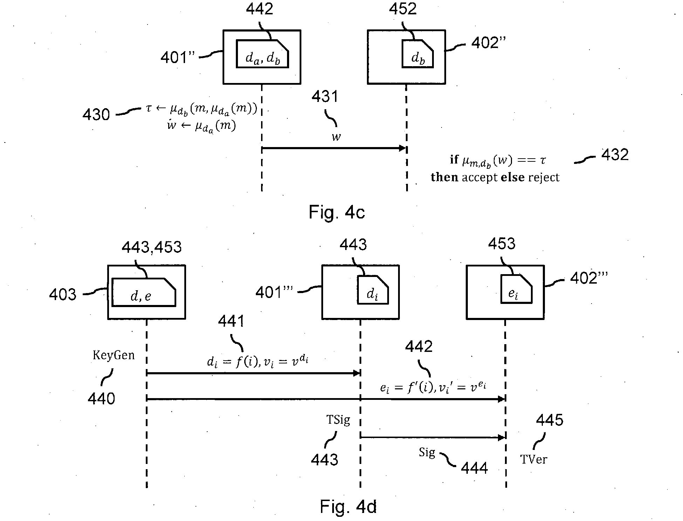

**Fig. 4c** shows a detailed, yet non-limiting, example of a Co-MAC. Similarly to Fig. 4a and Fig. 4b, the figure shows a single MAC-sender node 401" and a single MAC-recipient node 402", where the MAC-sender node has access to a first cryptographic key $d_a$ and a second cryptographic key $d_b$ as pre-shared key material 442, and the MAC-recipient node has access to the second cryptographic key $d_b$ as pre-shared key material 452.

In this example, it is demonstrated that it is not necessary for the Co-MAC to rely on the homomorphic properties of for example RSA. In this example, the first cryptographic key $d_a$ and the second cryptographic key $d_b$ may comprise respective keys of a message authentication code $\mu$, for example HMAC-SHA or another known MAC. The witness w may comprise a first message authentication code $w = \mu_{d_a}(m)$ of the transaction message $m$ with the first cryptographic key $d_a$. The co-message authentication code $\tau$ may comprise a second message authentication code computes $\tau = CoMAC_{d_a, d_b}(m) = \mu_{d_b}(m, \mu_{d_a}(m))$ of the first message authentication code $\mu_{d_a}(m)$ with the second cryptographic key $d_b$. As a specific example, the verification of the transaction may be performed as follows:

1. MAC-sender node 401" generates 430 two MAC keys $\{d_a, d_b\}$ such that $sk_a = d_a$ is random kept by the MAC-sender node and $sk_b = d_b$ is given to the MAC-recipient node.
2. The MAC-sender node computes 430 $\tau = CoMAC_{d_a, d_b}(m) = \mu_{d_b}(m, \mu_{d_a}(m))$.
3. To co-verify $\tau$, the MAC-sender node computes 430 $w = \mu_{d_a}(m)$ and then sends 431 w to the MAC-recipient node. To accept or reject, the MAC-recipient node compares: $\tau == \mu_{db}(m, w)$. This may succeed for a valid transaction because

$$CoMAC_{d_a, d_b}(m) = \mu_{d_b}(m, w) == \mu_{d_b}\left(m, \mu_{d_a}(m)\right) == \tau.$$

Also in this example it is in principle possible to distribute the functionality of the MAC-sender and/or MAC-recipient node among multiple nodes. How this is implemented, depends on the particular MAC that is used. For example, the Co-MAC and witness may be determined and/or verified using general-purpose multi-party computation techniques.

**Fig. 4d** shows a detailed, yet non-limiting, example of a Co-MAC. In particular, this example demonstrates a Co-TMAC. In this example, there may be multiple MAC-sender nodes 401''', for example, at least two, at least three, or at least five. The respective pre-shared MAC-sender key material 443 may comprise respective shares $d_i$ of a signing key $d$ of a digital signature scheme. The MAC-sender nodes 401''' may be configured to determine the co-message authentication code by jointly generating a digital signature, 444, using the signing key $d$.

Interestingly, in this example there may also be multiple MAC-recipient nodes 402'', for example, at least two, at least three, or at least five. The respective pre-shared MAC-recipient key material 402' may comprise respective shares $e_i$ of a verification key $e$ corresponding to the signing key $d$. The multiple MAC-recipient nodes 402' may be configured to verify the authenticity of a further transaction message by jointly verifying the digital signature generated by the MAC-sender nodes 401'''. By distributing the signing and verification keys, it may be achieved that the combined pre-shared MAC- recipient key material, in this case the verification key, is not known to any of the individual MAC-sender or MAC-recipient node and is not comprised in the transaction message.

In this example, the joint key material 443, 453 may be generated by a key generation device 403 and distributed among the MAC-sender signer nodes 401''' and MAC-recipient nodes 402'''. Interestingly, the key generation device 403 may not only distribute

the signing key $d$ but also the signature verification key $e$, thus allowing the signature verification key to remain hidden from the individual MAC-recipient nodes 402'''.

In particular, the digital signature scheme may be an RSA-based digital signature scheme. The co-message authentication code may be jointly generated and/or verified by performing a threshold exponentiation.

The Co-TMAC may be jointly generated by generating respective secret-shares of the signature based on the respective secret-shares 443 of the signer private key. The Co-TMAC may be jointly verified by generating respective secret-shares of the signature verification based on the respective secret-shares 453 of the public key.

As a concrete example, the techniques of this figure may be implemented based on the techniques discussed in R. Peeters et al., "Practical RSA Threshold Decryption for Things That Think", Proceedings of WISSec 2008. This reference discusses RSA threshold exponentiation. Interestingly, the inventors realized that the provided techniques may be adapted to distribute not just the signing key $d$ among multiple nodes, but also the signature verification key $e$.

In particular, in this concrete example, the key generation KeyGen, 440 by the key generation device 403; the distribution 441 of the MAC-sender key material among the MAC-sender nodes 401'''; and the distribution 442 of the MAC-recipient key material among the MAC-recipient nodes 402''', may be implemented as follows:

Phase 1. Key generation device 403 may generate two primes $p$ and $q$ e.g. of length $h/2$. The key generation device 403 may calculate an RSA modulus $n = pq$, $\lambda(n) = LCM(p-1)(q-1)$. The key generation device 403 may choose a prime $e > n$ forming the joint recipient key material, coprime with $\lambda(n)$, and may compute $d$ forming the joint sender key material such that $de = 1 \bmod \lambda(n)$. Both $e$, $d$ may be kept secret and are preferably erased by the key generation device 403 after key generation has completed.

Phase 2. Key generation device 403 may secret-share $d$ among the sender signer nodes. In particular, device 403 may construct a polynomial of order $k-1$: $f(x) = d + c_1 x + \cdots + c_{k-1} x^{k-1}$. For each MAC-sender node 401''', $1 \leq i \leq n$, device 403 may compute $d_i = f(i)$ as the secret share of that node. The secret share of a node may be sent over a private channel to the respective node. A random $v \in \mathbb{Z}_N^*$ may be chosen to make commitments, $v_i = v^{d_i}$, for $1 \leq i \leq n$, are the public verification keys <u>of the signing key $d$</u>. The public verification keys <u>of the signing key $d$</u> may be broadcast to the MAC-recipient nodes.

Phase 3. Key generation device 503 may secret-share $e$ among the MAC-recipient nodes 402'''. In particular, device '403 may construct a polynomial of order $k-1$: $f'(x) = e + c'_1 x + \cdots + c'_{k-1} x^{k-1}$. For each MAC-recipient node 402''', $1 \leq i \leq n$, device 403 may compute $e_i = f'(i)$ as the secret share of that node. The secret share of a node may be sent over a private channel to the respective node. A random $v' \in \mathbb{Z}_N^*$ is chosen to make commitments, $v'_i = v'^{e_i}$, for $1 \leq i \leq n$, are the public verification keys <u>of the signature verification key $e$</u>. The public verification keys <u>of the signature verification key $e$</u> may be broadcast to the MAC-sender nodes.

The generation and verification of the Co-MAC may be implemented by a double independent application of the threshold exponentiation of "Practical RSA Threshold Decryption for Things That Think". In particular, the MAC-sender nodes 401''' may perform a joint signature generation TSig, 433, by performing a threshold exponentiation using their shared signing key 443. The resulting signature 444 may form a co-message authentication code, and may be provided by the MAC-sender nodes 401''' to the MAC-recipient nodes 402'''. The MAC-recipient nodes may perform verification TVer, 445, by performing a threshold exponentiation using their shared verification key 453.

Specifically, signing: $\sigma \leftarrow Sign(m, d_i)$ of a message m with a distributed private key exponent $d_i$ may be performed as follows.

A hash function $H$ may be used mapping messages to elements of $Z_n^*$.

A signature share may be generated. A player $S_i$ in a subset of more than $t$ players may take as input a message $m$ and its individual share $e_i$, compute the signature share $\sigma_i = H(m)^{e_i}$, and broadcast $\sigma_i$.

Any sender(s) or recipient(s) may reconstruct the signature by computing the resulting signature $\sigma = \prod(\sigma^{L_i})$, where $L_i$ is the appropriate publicly known Lagrange coefficient for the set S. The output of the protocol is the designated verifier threshold signature $(m, \sigma)$.

Signature verification $0/1 \leftarrow Verify(\sigma, m, e_i)$ may be performed as follows.

A hash function $H$ may be used mapping messages to elements of $Z_n^*$. Using this hash, $h = H(m)$ may be computed.

To verify the signature $\sigma$ in a distributed way, a verification share may be generated. Player $V_i$ in a subset of more than $t$ players may take as inputs a hashing message $h'$ and a signature verification key share $e_i$, compute the verification share $h_i' = \sigma^{e_i} \bmod n$ and broadcasts $h'$.

The reconstruction may be performed by any one or more recipients $V$ by computing $h' = \prod(h_i'^{L_i})$, where $L_i$ is the appropriate publicly known Lagrange coefficient for the set $V$.

Value $h$ may be compared to $h'$ to find whether the signature is valid or not. The signature may be determined to be correct, if $h' = \sigma^e \bmod n = (h^d)^e \bmod n = h$.

It is noted that the provide techniques are flexible in terms of the number of MAC-sender nodes and MAC-recipient nodes. In particular, the number of MAC-sender nodes can be different from the number of MAC-recipient nodes. Although the provided example uses a key generation device 403, it is in principle also possible to avoid this by using ad-hoc techniques; for example, based on generic multi-party computation, in principle, any distributed computation functionality may be implemented, so also the distributed generation of key material 443, 453.

Some general information is now provided related to embodiments that involve designated verifier threshold signatures. Interestingly, a designated verifier signature scheme as described herein, may enable the signer to convince only the designated verifier that the signature made by the signer is authentic so that no third party other than the designated verifier can verify the validity of a designated verifier signature, since the designated verifier's private key is used in verifying phase. To eliminate the single point of failure on the private key, the signer's functionality may be distributed among multiple sender signer nodes, as described.

Generally, a standard digital signature scheme may allow a signer to sign messages, so that everyone given the message can verify its authenticity. Moreover, such a digital signature schemes may have a public verifiability property, which guarantees that a signer cannot cheat about messages he has signed.

However, in some cases, the public verifiability is not desired in practice, e.g., it may be undesirable for a sender to provide signatures to a third party when signing personal data (e.g. health records, income summary etc). For such cases, it is known to use a designated verifier signature (DVS), which make it possible to a signer A to convince the designated verifier B that a message he signed is authentic while, neither A nor the designated verifier B can convince any other party of authenticity of that message.

Different variants of DVS signature schemes are known. In a designated verifier signature, the verification protocol can only convince a particular verifier, preventing the verifier acting as an intermediary and launching man-in-the-middle attacks. In a designated confirmer signature, the validity of the signature can be confirmed by the signer or by another third party who knows the private key of a particular public key.

A designated verifier signature scheme may be described as a protocol with two participants Signer ($S$) and Verifier ($V$). The signer may construct a signature $\sigma$ of a message $m$, such that only one specified verifier can verify the validity of $\sigma$, e.g., the verifier cannot convince any other party of $\sigma$'s validity. The designated verifier property may be phrased as an ability of signer to generate indistinguishable signatures of $m$, so that no one else can distinguish, whether the signature $\sigma$ is created by $S$ or $V$.

A known designated verifier signature scheme is disclosed in F. Yang, C. Liao: "A Provably Secure and Efficient Strong Designated Verifier Signature Scheme", International Journal of Network Security, Vol. 11, No. 2, pp. 60-64, 2010.

Let $G$ be a group of prime order $q$, where $G$ is a subgroup of $Z_p^*$ for large primes $p$, $q$, where $q$ is a prime factor of $p$ - 1. Let $g$ be a generator of $G$. This scheme may be defined as follows:

— $KeyGen(1^n)$ generates a tuple $(x, X, y, Y)$ of private and public keys:

   - Alice: private key $x \leftarrow_R Z_q$, public key $X = g^x$

   - Bob: private key $y \leftarrow_R Z_q$, public key $Y = g\wedge y$

— $Sign(m, x, Y)$ outputs $(r, s)$, where

   - $s = H(m||t)$, where $t \leftarrow_R Z^*$

   - $r = (m||t) \cdot Y^{xs}$

— $Verify(m, (r, s), y, X)$:

   - $m||t \leftarrow r \cdot X - ys$

   - return $(H(m||t) =^? s)$

Various embodiments use secret sharing. An example of secret sharing is the so-called Shamir secret sharing scheme. The Shamir secret sharing scheme involves a threshold $0 \leq t \leq n - 1$ where $n$ is the number of parties among the material is distributed. Shamir secret sharing uses that a polynomial $f(X)$ of degree $t$ over a finite field can be reconstructed given $t + 1$ different points $(i, f(i))$, where $f(i)$ are the secret shares.

Various embodiments use verifiable secret sharing (VSS). An example of this is Feldman VSS. This is an extension of Shamir's secret sharing. Feldman VSS may be implemented by having the dealer also publishes $v_i = g^{a_i}$ in G for all $i \in [1, t]$ and $v_0 = g^\sigma$ in $G$. More generally, a VSS protocol among $n$ parties $P = \{P_1, P_2, ..., P_n\}$ with a distinguished party $D \in P$ may comprise two phases, a sharing phase and a reconstruction phase.

In the sharing phase, initially, $D$ may hold an input $s$, referred to as the secret, and parties $S_i$ may hold independent random inputs $r_i$. The sharing phase may comprise several rounds of interaction between parties. At the end of the sharing phase, honest party $P_i$ may holds a view $v_i$ that may be used to reconstruct the dealer's secret later.

In the reconstruction phase, party $S_i$ may publish its view $v_i$ from the sharing phase, and a reconstruction function $Rec(v_1, ..., v_n)$ may be applied and taken as the protocol's output.

Various embodiments also use a threshold verifiable random function. This may effectively be a distributed version of verifiable random function. Mathematically, this this primitive may be defined as comprising the following algorithms:

-   *DistKeyGen*$(1^\lambda)$: outputs secret keys $tsk_i$, $i \in [n]$, corresponding public partial keys $tsk_i$ and a global public key $tpk$.
-   *PartialEval*$(x, tsk_i, tpk_i)$ is a deterministic algorithm which outputs a pair $m_i = (y_i, \Pi_i)$ where $y_i$ is the evaluation of the (implicit) random function $F$ at $x$ and $\Pi_i$ is a proof.
-   *Combine*$(tpk, tpk_i, x, A, m_i)$ is a probabilistic algorithm that takes a set of at least $t + 1$ evaluations, indexed by A, and outputs either data $(y, \Pi)$ comprising a global evaluation $y$ and a global proof $\Pi$, or $\perp$.
-   *Verify*$(tpk, x, y, \Pi)$ is a probabilistic algorithm that outputs 0 or 1 (respectively meaning "reject" or "accept" the proof).

Various embodiments also use distributed key generation. One way of implementing distributed key generation is by having respective nodes runs respective VSS instance. Distributed shares may be added at the end to generate a combined shared secret without a dealer. Interestingly, DKG can operate without an external trusted party. Mathematically, a $(n, t)$-DKG scheme may be defined as comprising a sharing phase and a reconstruction phase.

In the sharing phase, node $P_i$ may distribute a secret $z_i \in K$ among $n$ nodes, where $K$ is e.g. a sufficiently large additive cyclic group. At the end of the sharing phase, honest node $P_i$ may hold a share $s_i$ of the distributed secret $s$, e.g., a pre-decided linear combination of the shared $z_i$ values.

In the reconstruction phase, node $P_i$ may broadcasts secret share $s_i'$ and a reconstruction function may be applied in order to compute the secret $s = Rec(s_1', s_2', ..., s_n')$. For honest nodes, $s_i' = s_i$, while for malicious nodes $s_i'$ may be different from $s_i$ or absent.

**Fig. 5** shows a detailed, yet non-limiting, example of a transaction using a designated verifier threshold signature. This example may involve multiple sender signer nodes 501, for example, at least two, at least three, or at least five. The example may also involve multiple recipient signer nodes 502.

The respective sender signer nodes 501 may have access to respective pre-shared sender key material 540 comprising respective shares $x_i$ of a signing key of a digital signature scheme. In this example, the digital signature scheme may be a designated-verifier digital signature scheme. In this case, the respective pre-shared recipient key material 550 of the recipient signer nodes 502 may comprise respective secret-shares $y_i$ of a verifier private key according to the designated-verifier digital signature scheme. The sender signer nodes 501 may have access to the public key Y of the recipient signer nodes 502 and the recipient signer nodes 502 may have access to the public key $X$ of the sender signer nodes 501. The public keys may be kept secret, but this is not needed.

Although it is in principle possible to use any designated verifier signature scheme, a preferred option is to use a DSA-based digital signature, more preferably an EcDSA-based digital signature scheme. The sender and recipient signer nodes may perform a distributed key generation protocol 530 to obtain their key material 540, 550. Interestingly, such distributed key generation can be performed particularly efficiently without a trusted party when using (Ec)DSA, using techniques known per se.

As an example, the techniques of C. Komlo and I. Goldberg, "FROST: Flexible Round-Optimized Schnorr Threshold Signatures", Internet-Draft draft-irtf-cfrg-frost-00, Internet Engineering Task Force, may be applied in the present settings as follows. Let $S$ denotes parties 501 capable of signing a message. Let $V$ denote verifiers 502 capable of checking a signature on a message.

- Distributed key generation (DKG): $(x_i, (\overline{X}, X)), (y_i, (\overline{Y}, Y)) \leftarrow KeyGen(1^\lambda)$ may output private key $x_i$, public key $X$ and public shares $X =< X_1, ...,X_n >$ as follows:

**Phase 1.**

    1. Participant $P_i$ samples $t$ random values $(a_{i0}, ..., a_{i(t-1)}) \leftarrow Z_q$, and uses these values as coefficients to define a degree $t - 1$ polynomial $f_i(x) = \Sigma a_{ij}x_j$.
    2. Participant $P_i$ computes public commitment $C_i = \{C_{i0}, ..., C_{i(t-1)}\}$ where $C_{ij} = g^{a_{ij}}$, $0 j \le t - 1$
    3. $P_i$ computes a Schnorr proof of knowledge to the corresponding secret $a_{i0}$ by calculating $S_i = (R_i, \mu_i)$
    4. $P_i$ broadcasts $C_i, S_i$ to the other participants.
    5. Upon receiving $C_j, S_j$ from other participants, participant $P_i$ verifies $S_j = (R_j, \mu_j)$, using Schnorr's protocol.
    6. $P_i$ outputs $f_i, C$.

**Phase 2.**

    1. Each $P_i$ securely sends to each other participant $P_j$ a secret share $(j, f_i(j))$.

    2. $P_i$ upon receiving $(i, f_j(i))$ from $P_j$ verifies that $g^{f_j(i)} =^? \prod_{k=0}^{t-1} C_{jk}^{i^k}$, aborting if this fails.

    3. $P_i$ calculates long-lived private signing share by computing $x_i = \sum_{k=1}^{n} f_k(i)$, stores $x_i$ securely.

    4. Parties calculate public verification share $X_i = \prod_{k=1}^{n} C_{jk}$, and the group's public key $\overline{X} = \prod_{j=1}^{n} C_{j0}$.

The above steps may be repeated for the verifier private key 550, outputting the private key $y_i$, the public key Y and parties public shares $Y =< Y_1, ... , Y_n >$.

The sender signer nodes 501 may be configured to determine the co-message authentication code by jointly generating 533 a digital signature 534 using the signing key 540. The recipient signer nodes 535 may be configured to jointly verify 535 the digital signature as a designated verifier using their secret-key shares 550.

In particular, a designated verifier threshold signature 534 may be used that comprises a hash value $s$ and a shared secret value $r$. The hash value may be based on the transaction message $m$ and a random value $t$. The shared-secret value $r$ may be based on a shared secret $Y^{xs} = X^{ys}$ according to the signer and verifier keys and based on the hash value $s$, wherein the shared secret is blinded with the random value $r$.

In particular, a variant may be used of the DVS scheme proposed in F. Yang, C. Liao: "A Provably Secure and Efficient Strong Designated Verifier Signature Scheme", International Journal of Network Security, 2010, discussed previously in this specification, may be used. It is noted that in the existing theme, in *Sign(m, x, Y)* in order to calculate $r = (m||t) \cdot Y^{xs}$, implicitly an encoding $f$ is used that maps arbitrary (unbounded) binary string $m||t \in \{0, 1\}^*$ to a bounded group $G$. Also, in *Verify(m, (r, s), y, X)*, in order to evaluate $m||t \leftarrow r \cdot X^{-ys}$, the encoding is revertible, e.g., there is a decoding $f^{-1} : G \rightarrow \{0, 1\}^*$ that reconstructs original message from the member of the bounded group G. For typical applications in the setting of transactions, such an encoding may not be possible. Accordingly, interestingly, the inventors propose an improved version of the above scheme. Namely, let $H:\{0,1\}^* \rightarrow Z_p$ be a hash e.g., to a field. Interestingly, the improved version may blind the shared secret with the random value without the transaction message, thereby remedying the above problems. In particular:

− $KeyGen(1^n)$ generates a tuple $(x, X, y, Y)$ of private and public keys:

  • Alice: private key $x \leftarrow_R Z_q$, public key $X = g^x$

  • Bob: private key $y \leftarrow_R Z_q$, public key $Y = g^y$

− $Sign(m, x, Y)$, outputs $(r, s)$:

  • $t \leftarrow_R G$

  • $s = H(t||m)$

  • $r = t \cdot Y^{xs}$

− $Verify(m, (r, s), y, X)$:

  • $t = r \cdot X^{-ys}$

  • return $(H(t||m) =^? s)$

Interestingly, the above designated verifier signature scheme may enable efficient joint determining and verifying of the designated verifier threshold signature. The determining 533 may be performed by jointly randomly generating the random value $t$, and generating respective secret-shares $r_i$ of the shared-secret value based on the respective secret-shares of the signer private key $x_i$. The verification 535 may be performed by generating respective secret-shares $y_i$ of the shared secret based on the respective secret-shares of the verifier private key $y_i$.

In particular, joint signing 533 may be performed as follows: - Signing: $(s, r) \leftarrow$ Sign $(M, x_i, (Y, Y))$

Random value $t$ may be generated in a distributed way as is known per se, e.g., t out of n senders from S may run a TVRF-based random beacon as introduced by the DRAND in I. Cascudo et al., "Mt. random: Multi-tiered randomness beacons", https://ia.cr/2021/1096. Here, the transaction message M may be used as a seed on initial TVRF input; in a subsequent round, the TVRF may be applied to the output of the previous round.

In order to execute the signature share generation protocol, a (t-out-of-n) party from S may take as inputs the transaction message $M$ and its individual key share $x_i$, compute the secret share of the shared-secret value $r_i = \overline{Y}^{x_i s}$, where $sH(M || t)$. The party may then broadcast $r_i$.

The signature may be reconstruction by any one or more sender signer nodes, e.g., by a designated player $D$.

In order to achieve robustness, D may optionally check correctness of the shared-secret value, e.g., $(g, r_i) \overset{?}{=} e(Y_i, \overline{Y}^s)$ for each $i$. If this does not hold, new output may be requested from the corresponding player or it is assumed malicious.

Letting $R$ be a set of $t + 1$ players assumed to be honest, $D$ may compute the resulting signature as $r = t \cdot \prod_{i \in R} r_i^{L_i}$ where $L_i$ is the appropriate publicly known Lagrange coefficient for the set $R$. The output of the joint determination of the signature is $(s, r)$.

Joint verification 535 may be implemented as follows: - {0,1} ← Verify $(M, (r, s), y_i, (X, \overline{X}))$ : Given signer's public key $X$, verifier's private key $x_i$, a message $M$, and a signature $(s, r)$.

Player $V_i$ in a subset of more than $t$ players may take as input a signature $(s, r)$, and its private key share $y_i$, and compute secret-shared $\gamma_i \leftarrow X^{-y_i s}$ of the shared secret. The party may broadcast $\gamma_i$ to other parties.

One or more parties $D'$ from $V$ may compute $t \leftarrow r \cdot \prod_{i \in S} \gamma_i^{L_i}$ where $L_i$ is the appropriate publicly known Lagrange coefficient for the set V.

The party or parties $D'$ may compute $b = (H(m || t) \overset{?}{=} s)$ and output a bit $b = 1$ if the signature is valid and $b = 0$ if not.

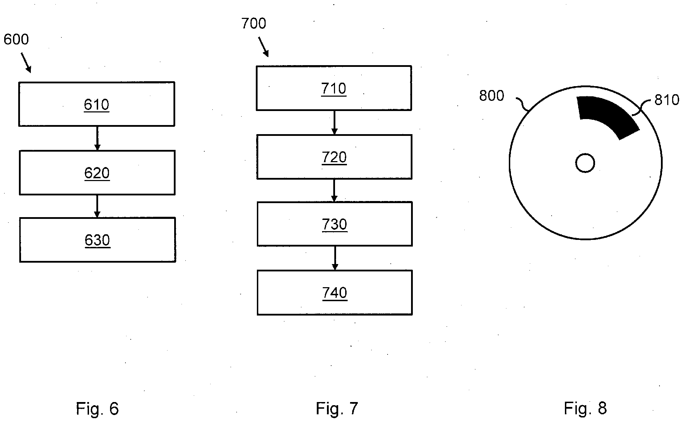

**Fig. 6** shows a block-diagram of computer-implemented method 600 of participating as a sender signer node in verification of authenticity of a transaction message. The transaction may involve multiple sender signer nodes. The multiple sender signer nodes may comprise the sender signer node. The transaction may further involve multiple recipient signer nodes. Respective sender signer nodes may have access to respective pre-shared sender key material. Respective recipient signer nodes may have access to respective pre-shared recipient key material.

The method 600 may be for use in a transaction system as described herein, e.g., transaction system 300 of Fig. 3. The method 600 may correspond to an operation of the system 100 of Fig. 1. However, this is not a limitation, in that the method 600 may also be performed using another system, apparatus or device.

The method 600 may comprise, in an operation titled "ACCESS KEY MATERIAL", accessing 610 the pre-shared sender key material of the sender signer node.

The method 600 may comprise, in an operation titled "COMMUNICATE", performing 620 digital communication with the one or more sender signer nodes and/or the one or more recipient signer nodes.

The method 600 may comprise, in an operation titled "DETERMINE DVTS", jointly with the multiple sender signer nodes, determining 630 a designated verifier threshold signature on the transaction message. The designated verifier threshold signature may allow the one or more recipient signer nodes to jointly verify the authenticity of the transaction message with respect to the pre-shared recipient key material. The pre-shared sender key material of the sender signer node may not allow to determine the designated verifier threshold signature.

**Fig. 7** shows a block-diagram of computer-implemented method 700 of participating as a recipient signer node in a verification of authenticity of a transaction message. The transaction may involve multiple sender signer nodes and multiple recipient signer nodes. The multiple recipient signer nodes may comprise the recipient signer node. Respective sender signer nodes may have access to respective pre-shared sender key material and respective recipient signer nodes have access to respective pre-shared recipient key material.

The method 700 may be for use in a transaction system as described herein, e.g., transaction system 300 of Fig. 3. The method 700 may correspond to an operation of the system 200 of Fig. 2. However, this is not a limitation, in that the method 700 may also be performed using another system, apparatus or device.

The method 700 may comprise, in an operation titled "ACCESS KEY MATERIAL", accessing 710 the pre-shared recipient key material of the recipient signer node.

The method 700 may comprise, in an operation titled "COMMUNICATE", performing 720 digital communication with the one or more sender signer nodes and/or the one or more recipient signer nodes.

The method 700 may comprise, in an operation titled "OBTAIN DVTS", obtaining 730 a designated verifier threshold signature determined by the one or more sender signer nodes.

The method 700 may comprise, in an operation titled "VERIFY DVTS", using the designated verifier threshold signature to, jointly with the multiple recipient signer nodes, verify 740 the authenticity of the transaction message with respect to the pre-shared recipient key material. The pre-shared recipient key material of the recipient signer node may not allow to verify the authenticity. The combined pre-shared recipient key material may not allow to determine the designated verifier threshold signature.

It will be appreciated that, in general, the operations of method 600 of Fig. 6 and method 700 of Fig. 7 may be performed in any suitable order, e.g., consecutively, simultaneously, or a combination thereof, subject to, where applicable, a particular order being necessitated, e.g., by input/output relations. Some or all of the methods may also be combined, e.g., method 600 of participating as a sender signer node for a transaction may be applied to transfer a digital asset received earlier by participating as a recipient signer node for an earlier transaction according to method 600. Method 600 of participating as a sender signer node and method 700 of participating as a recipient signer node may together form a method of verifying authenticity of a transaction message, wherein method 600 is performed by one or more sender signer nodes and method 700 is performed by one or more recipient signer nodes, wherein typically the sender and recipient signer nodes are all different devices or systems.

The method(s) may be implemented on a computer as a computer implemented method, as dedicated hardware, or as a combination of both. As also illustrated in **Fig. 8,** instructions for the computer, e.g., executable code, may be stored on a computer readable medium 800, e.g., in the form of a series 810 of machine-readable physical marks and/or as a series of elements having different electrical, e.g., magnetic, or optical properties or values. The medium 800 may be transitory or non-transitory. Examples of computer readable mediums include memory devices, optical storage devices, integrated circuits, servers, online software, etc. Fig. 8 shows an optical disc 1100. Alternatively, the computer readable medium 800 may comprise data 810 representing pre-shared sender key material for use by a sender signer node and/or pre-shared recipient key material for use by a recipient signer node as described herein.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. A system (300) for verifying authenticity of a transaction message representing a digital transaction, wherein the system comprises multiple sender signer nodes (301-1, 301-2, 301-3) and multiple recipient signer nodes (302-1, 302-2, 302-3), wherein respective sender signer nodes have access to respective pre-shared sender key material (041, 042, 043) and respective recipient signer nodes have access to respective pre-shared recipient key material (051, 052, 053), wherein the respective pre-shared sender key material comprises respective secret-shares of a signer private key according to a digital signature scheme, wherein the respective pre-shared recipient key material comprises respective secret-shares of a verifier private key according to the designated-verifier digital signature scheme, wherein the digital signature scheme is a designated-verifier digital signature scheme, wherein the multiple sender signer nodes and the multiple recipient signer nodes are configured to verify the authenticity of the transaction message by:

   - at the multiple sender signer nodes, jointly determining a designated verifier threshold signature on the transaction message, wherein the designated verifier threshold signature allows the multiple recipient signer nodes to jointly verify the authenticity of the transaction message with respect to the pre-shared recipient key material, wherein the pre-shared sender key material of a single sender signer node does not allow to determine the designated verifier threshold signature, wherein the designated verifier threshold signature comprises a hash value and a shared secret value, wherein:

      - the hash value is based on the transaction message and a random value, and
      - the shared-secret value is based on a shared secret according to the signer and verifier keys and based on the hash value, wherein the shared secret is blinded with the random value;

   - sending the designated verifier threshold signature from the multiple sender signer nodes to the multiple recipient signer nodes;
   - at the multiple recipient signer nodes, using the designated verifier threshold signature to jointly verify the authenticity of the transaction message with respect to the pre-shared recipient key material, wherein the pre-shared recipient key material of a single recipient signer node does not allow to verify the authenticity, and wherein the combined pre-shared recipient key material does not allow to determine the designated verifier threshold signature.

2. The system (300) of claim 1, wherein the system is configured to perform the digital transaction on a layer 2 chain of a distributed ledger, such as a sidechain.

3. The system (300) of any one of the preceding claims, wherein:

   - jointly determining the designated verifier threshold signature comprises jointly randomly generating the random value, and generating respective secret-shares of the shared-secret value based on the respective secret-shares of the signer private key; and
   - jointly verifying the authenticity of the transaction message comprises generating respective secret-shares of the shared secret based on the respective secret-shares of the verifier private key.

4. The system (300) of any one of the preceding claims, wherein the respective pre-shared recipient key material comprises respective secret-shares of a public key corresponding to the signer private key.

5. The system (300) of any one of the preceding claims, wherein the digital signature scheme is based on a Diffie-Hellman cryptographic assumption.

6. The system (300) of any of the preceding claims, wherein one or more of the multiple recipient signer nodes are further configured to determine a co-message authentication code from a further transaction message identifying the recipient of the digital transaction and from pre-shared MAC-sender key material of the one or more recipient signer nodes, and wherein one or more of the sender signer nodes are configured to verify the co-message authentication code with respect to pre-shared MAC-recipient key material.

7. The system (300) of claim 6, wherein:

   - the pre-shared MAC-sender key material comprises a first cryptographic key and a second cryptographic key, and the pre-shared MAC-recipient key material comprises the second cryptographic key;
- the one or more recipient signer nodes are configured to compute the co-message authentication code using the first and second cryptographic key, and to further compute a witness using the first but not the second cryptographic key and provide the witness to the recipient signer node; and
- the one or more sender signer nodes are configured to verify the co-message authentication code with respect to the witness and the second cryptographic key.

8. A sender signer node (100) for use in the system for verifying authenticity of a transaction message of any one of claims 1-7, wherein the system comprises multiple sender signer nodes, wherein the multiple sender signer nodes comprise the sender signer node, and wherein the system further comprises multiple recipient signer nodes, wherein respective sender signer nodes have access to respective pre-shared sender key material and respective recipient signer nodes have access to respective pre-shared recipient key material, wherein the respective pre-shared sender key material comprises respective secret-shares of a signer private key according to a digital signature scheme, wherein the respective pre-shared recipient key material comprises respective secret-shares of a verifier private key according to the designated-verifier digital signature scheme, wherein the digital signature scheme is a designated-verifier digital signature scheme, wherein the sender signer node comprises:

- a data interface (120) for accessing the pre-shared sender key material of the sender signer node;
- a communication interface (180) configured for communication with the multiple sender signer nodes and/or the multiple recipient signer nodes;
- a processor subsystem (140) configured to, jointly with the multiple sender signer nodes, determine a designated verifier threshold signature on the transaction message, wherein the designated verifier threshold signature allows the multiple recipient signer nodes to jointly verify the authenticity of the transaction message with respect to the pre-shared recipient key material, wherein the pre-shared sender key material of the sender signer node does not allow to determine the designated verifier threshold signature, wherein the designated verifier threshold signature comprises a hash value and a shared secret value, wherein:

- the hash value is based on the transaction message and a random value, and

- the shared-secret value is based on a shared secret according to the signer and verifier keys and based on the hash value, wherein the shared secret is blinded with the random value.

9. A recipient signer node (200) for use in the system for verifying authenticity of a transaction message of any one of claims 1-7, wherein the system comprises multiple sender signer nodes and multiple recipient signer nodes, wherein the multiple recipient signer nodes comprise the recipient signer node, wherein respective sender signer nodes have access to respective pre-shared sender key material and respective recipient signer nodes have access to respective pre-shared recipient key material, wherein the respective pre-shared sender key material comprises respective secret-shares of a signer private key according to a digital signature scheme, wherein the respective pre-shared recipient key material comprises respective secret-shares of a verifier private key according to the designated-verifier digital signature scheme, wherein the digital signature scheme is a designated-verifier digital signature scheme, wherein the recipient signer node comprises:

- a data interface (220) for accessing the pre-shared recipient key material of the recipient signer node;
- a communication interface (280) configured for communication with the multiple sender signer nodes and/or the multiple recipient signer nodes;
- a processor subsystem (240) configured to obtain a designated verifier threshold signature, wherein the designated verifier threshold signature comprises a hash value and a shared secret value, wherein:

- the hash value is based on the transaction message and a random value, and

- the shared-secret value is based on a shared secret according to the signer and verifier keys and based on the hash value, wherein the shared secret is blinded with the random value, and use the designated verifier threshold signature to, jointly with the multiple recipient signer nodes, verify the authenticity of the transaction message with respect to the pre-shared recipient key material, wherein the pre-shared recipient key material of the recipient signer node does not allow to verify the authenticity, and wherein the combined pre-shared recipient key material does not allow to determine the designated verifier threshold signature.

10. A computer-implemented method (600) of participating as a sender signer node in verification of authenticity of a transaction message, wherein the transaction involves multiple sender signer nodes, wherein the multiple sender signer nodes comprise the sender signer node, and wherein the transaction further involves multiple recipient signer nodes, wherein respective sender signer nodes have access to respective pre-shared sender key material and respective recipient signer nodes have access to respective pre-shared recipient key material, wherein the respective pre-shared sender key material comprises respective secret-shares of a signer private key according to a digital signature scheme, wherein the respective pre-shared recipient key material comprises respective secret-shares of a verifier private key according to the designated-verifier digital signature scheme, wherein the digital signature scheme is a designated-verifier digital signature scheme, wherein the method comprises:

- accessing (610) the pre-shared sender key material of the sender signer node;
- performing (620) digital communication with the multiple sender signer nodes and/or the multiple recipient signer nodes;
- jointly with the multiple sender signer nodes, determining (630) a designated verifier threshold signature on the transaction message, wherein the designated verifier threshold signature allows the multiple recipient signer nodes to jointly verify the authenticity of the transaction message with respect to the pre-shared recipient key material, wherein the pre-shared sender key material of the sender signer node does not allow to determine the designated verifier threshold signature, wherein the designated verifier threshold signature comprises a hash value and a shared secret value, wherein:

- the hash value is based on the transaction message and a random value, and

- the shared-secret value is based on a shared secret according to the signer and verifier keys and based on the hash value, wherein the shared secret is blinded with the random value.

11. A computer-implemented method (700) of participating as a recipient signer node in a verification of authenticity of a transaction message, wherein the transaction involves multiple sender signer nodes and multiple recipient signer nodes, wherein the multiple recipient signer nodes comprise the recipient signer node, wherein respective sender signer nodes have access to respective pre-shared sender key material and respective recipient signer nodes have access to respective pre-shared recipient key material, wherein the respective pre-shared sender key material comprises respective secret-shares of a signer private key according to a digital signature scheme, wherein the respective pre-shared recipient key material comprises respective secret-shares of a verifier private key according to the designated-verifier digital signature scheme, wherein the digital signature scheme is a designated-verifier digital signature scheme, wherein the method comprises:

- accessing (710) the pre-shared recipient key material of the recipient signer node;
- performing (720) digital communication with the multiple sender signer nodes and/or the multiple recipient signer nodes;
- obtaining (730) a designated verifier threshold signature determined by the multiple sender signer nodes, , wherein the designated verifier threshold signature comprises a hash value and a shared secret value, wherein:

- the hash value is based on the transaction message and a random value, and

- the shared-secret value is based on a shared secret according to the signer and verifier keys and based on the hash value, wherein the shared secret is blinded with the random value, and using the designated verifier threshold signature to, jointly with the multiple recipient signer nodes, verify (740) the authenticity of the transaction message with respect to the pre-shared recipient key material, wherein the pre-shared recipient key material of the recipient signer node does not allow to verify the authenticity, and wherein the combined pre-shared recipient key material does not allow to determine the designated verifier threshold signature.

12. A transitory or non-transitory computer-readable medium (800) comprising data (810) representing:

- instructions which, when executed by a processor system, cause the processor system to perform the computer-implemented method according to claim 10 or 11; and/or
- pre-shared sender key material for use by a sender signer node according to claim 8; and/or
- pre-shared recipient key material for use by a recipient signer node according to claim 9.

**Patentansprüche**

1. Ein System (300) zum Verifizieren einer Authentizität einer Transaktionsnachricht, die eine digitale Transaktion darstellt, wobei das System mehrere Sender-Zeichnerknoten (301-1, 301-2, 301-3) und mehrere Empfänger-Zeichnerknoten (302-1, 302-2, 302-3) umfasst, wobei jeweilige Sender-Zeichnerknoten Zugriff auf jeweiliges vorab geteiltes Sender-Schlüsselmaterial (041, 042, 043) aufweisen und jeweilige Empfänger-Zeichnerknoten Zugriff auf jeweiliges vorab geteiltes Empfänger-Schlüsselmaterial (051, 052, 053) aufweisen, wobei das jeweilige vorab geteilte Sender-Schlüsselmaterial jeweilige Geheimanteile eines Zeichner-Privatschlüssels gemäß einem digitalen Signaturschema umfasst, wobei das jeweilige vorab geteilte Empfänger-Schlüsselmaterial jeweilige Geheimanteile eines Verifizierer-Privatschlüssels gemäß dem zugewiesenen digitalen Verifizierer-Signaturschema umfasst, wobei das digitale Signaturschema ein zugewiesenes digitales Verifizierer-Signaturschema ist, wobei die mehreren Sender-Zeichnerknoten und die mehreren Empfänger-Zeichnerknoten dazu konfiguriert sind, die Authentizität der Transaktionsnachricht durch Folgendes zu verifizieren:

   - bei den mehreren Sender-Zeichnerknoten, gemeinsames Bestimmen einer zugewiesenen Verifizierer-Schwellenwertsignatur auf der Transaktionsnachricht, wobei die zugewiesene Verifizierer-Schwellenwertsignatur den mehreren Empfänger-Zeichnerknoten ermöglicht, gemeinsam die Authentizität der Transaktionsnachricht in Bezug auf das vorab geteilte Empfänger-Schlüsselmaterial zu verifizieren, wobei das vorab geteilte Sender-Schlüsselmaterial eines einzelnen Sender-Zeichnerknotens nicht ermöglicht, die zugewiesene Verifizierer-Schwellenwertsignatur zu bestimmen, wobei die zugewiesene Verifizierer-Schwellenwertsignatur einen Hashwert und einen geteilten Geheimwert umfasst, wobei:

      - der Hashwert auf der Transaktionsnachricht und einem Zufallswert basiert, und
      - der geteilte Geheimwert auf einem geteilten Geheimnis gemäß dem Zeichner- und Verifiziererschlüssel basiert und auf dem Hashwert basiert, wobei das geteilte Geheimnis mit dem Zufallswert verblendet wird;
      - Senden der zugewiesenen Verifizierer-Schwellenwertsignatur von den mehreren Sender-Zeichnerknoten an die mehreren Empfänger-Zeichnerknoten;
      - bei den mehreren Empfänger-Zeichnerknoten, Verwenden der zugewiesenen Verifizierer-Schwellenwertsignatur, um gemeinsam die Authentizität der Transaktionsnachricht in Bezug auf das vorab geteilte Empfänger-Schlüsselmaterial zu verifizieren, wobei das vorab geteilte Empfänger-Schlüsselmaterial eines einzelnen Empfänger-Zeichnerknotens nicht ermöglicht, die Authentizität zu verifizieren, und wobei das kombinierte vorab geteilte Empfänger-Schlüsselmaterial nicht ermöglicht, die zugewiesene Verifizierer-Schwellenwertsignatur zu bestimmen.

2. Das System (300) nach Anspruch 1, wobei das System dazu konfiguriert ist, die digitale Transaktion auf einer Layer-2-Kette eines verteilten Hauptbuchs (Distributed Ledger) durchzuführen, wie einer Seitenkette.

3. Das System (300) nach einem der vorstehenden Ansprüche, wobei:

   - gemeinsames Bestimmen der zugewiesenen Verifizierer-Schwellenwertsignatur umfasst, gemeinsam zufällig den Zufallswert zu erzeugen und jeweilige Geheimnisanteile des geteilten Geheimniswerts basierend auf den jeweiligen Geheimnisanteilen des Zeichner-Privatschlüssels zu erzeugen; und
   - gemeinsames Verifizieren der Authentizität der Transaktionsnachricht Erzeugen jeweiliger Geheimnisanteile des geteilten Geheimnisses basierend auf den jeweiligen Geheimnisanteilen des Verifizierer-Privatschlüssels umfasst.

4. Das System (300) nach einem der vorstehenden Ansprüche, wobei das jeweilige vorab geteilte Empfänger-Schlüsselmaterial jeweilige Geheimnisanteile eines öffentlichen Schlüssels umfasst, der dem Zeichner-Privatschlüssel entspricht.

5. Das System (300) nach einem der vorstehenden Ansprüche, wobei das digitale Signaturschema auf einem kryptografischen Diffie-Hellman-Problem basiert.

6. Das System (300) nach einem der vorstehenden Ansprüche, wobei einer oder mehrere der mehreren Empfänger-Zeichnerknoten weiter dazu konfiguriert sind, einen Co-Nachrichtenauthentifizierungscode aus einer weiteren Transaktionsnachricht, die den Empfänger der digitalen Transaktion identifiziert, und aus vorab geteiltem MAC-Sender-Schlüsselmaterial des einen oder der mehreren Empfänger-Zeichnerknoten zu bestimmen, und wobei einer oder mehrere der Sender-Zeichnerknoten dazu konfiguriert sind, den Co-Nachrichtenauthentifizierungscode in Bezug auf vorab geteiltes MAC-Empfänger-Schlüsselmaterial zu verifizieren.

7. Das System (300) nach Anspruch 6, wobei:

- das vorab geteilte MAC-Sender-Schlüsselmaterial einen ersten kryptografischen Schlüssel und einen zweiten kryptografischen Schlüssel umfasst und das vorab geteilte MAC-Empfänger-Schlüsselmaterial den zweiten kryptografischen Schlüssel umfasst;
- der eine oder die mehreren Empfänger-Zeichnerknoten dazu konfiguriert sind, den Co-Nachrichtenauthentifizierungscode unter Verwendung des ersten und des zweiten kryptografischen Schlüssels zu berechnen und weiter einen Zeugen unter Verwendung des ersten aber nicht des zweiten kryptografischen Schlüssels zu berechnen und dem Empfänger-Zeichnerknoten den Zeugen bereitzustellen; und
- der eine oder die mehreren Sender-Zeichnerknoten dazu konfiguriert sind, den Co-Nachrichtenauthentifizierungscode in Bezug auf den Zeugen und den zweiten kryptografischen Schlüssel zu verifizieren.

8. Ein Sender-Zeichnerknoten (100) zur Verwendung in dem System zum Verifizieren einer Authentizität einer Transaktionsnachricht nach einem der Ansprüche 1-7, wobei das System mehrere Sender-Zeichnerknoten umfasst, wobei die mehreren Sender-Zeichnerknoten den Sender-Zeichnerknoten umfassen, und wobei das System weiter mehrere Empfänger-Zeichnerknoten umfasst, wobei jeweilige Sender-Zeichnerknoten Zugriff auf jeweiliges vorab geteiltes Sender-Schlüsselmaterial aufweisen und jeweilige Empfänger-Zeichnerknoten Zugriff auf jeweiliges vorab geteiltes Empfänger-Schlüsselmaterial aufweisen, wobei das jeweilige vorab geteilte Sender-Schlüsselmaterial jeweilige Geheimanteile eines Zeichner-Privatschlüssels gemäß einem digitalen Signaturschema umfasst, wobei das jeweilige vorab geteilte Empfänger-Schlüsselmaterial jeweilige Geheimanteile eines Verifizierer-Privatschlüssels gemäß dem zugewiesenen digitalen Verifizierer-Signaturschema umfasst, wobei das digitale Signaturschema ein zugewiesenes digitales Verifizierer-Signaturschema ist, wobei der Sender-Zeichnerknoten Folgendes umfasst:

- eine Datenschnittstelle (120) zum Zugreifen auf das vorab geteilte Sender-Schlüsselmaterial des Sender-Zeichnerknotens;
- eine Kommunikationsschnittstelle (180), die zur Kommunikation mit den mehreren Sender-Zeichnerknoten und/oder den mehreren Empfänger-Zeichnerknoten konfiguriert ist;
- ein Prozessorsubsystem (140), das dazu konfiguriert ist, gemeinsam mit den mehreren Sender-Zeichnerknoten eine zugewiesene Verifizierer-Schwellenwertsignatur auf der Transaktionsnachricht zu bestimmen, wobei die zugewiesene Verifizierer-Schwellenwertsignatur den mehreren Empfänger-Zeichnerknoten ermöglicht, gemeinsam die Authentizität der Transaktionsnachricht in Bezug auf das vorab geteilte Empfänger-Schlüsselmaterial zu verifizieren, wobei das vorab geteilte Sender-Schlüsselmaterial des Sender-Zeichnerknotens nicht ermöglicht, die zugewiesene Verifizierer-Schwellenwertsignatur zu bestimmen, wobei die zugewiesene Verifizierer-Schwellenwertsignatur einen Hashwert und einen geteilten Geheimwert umfasst, wobei:

- der Hashwert auf der Transaktionsnachricht und einem Zufallswert basiert, und
- der geteilte Geheimwert auf einem geteilten Geheimnis gemäß dem Zeichner- und Verifiziererschlüssel basiert und auf dem Hashwert basiert, wobei das geteilte Geheimnis mit dem Zufallswert verblendet wird.

9. Ein Empfänger-Zeichnerknoten (200) zur Verwendung in dem System zum Verifizieren einer Authentizität einer Transaktionsnachricht nach einem der Ansprüche 1-7, wobei das System mehrere Sender-Zeichnerknoten und mehrere Empfänger-Zeichnerknoten umfasst, wobei die mehreren Empfänger-Zeichnerknoten den Empfänger-Zeichnerknoten umfassen, wobei jeweilige Sender-Zeichnerknoten Zugriff auf jeweiliges vorab geteiltes Sender-Schlüsselmaterial aufweisen und jeweilige Empfänger-Zeichnerknoten Zugriff auf jeweiliges vorab geteiltes Empfänger-Schlüsselmaterial aufweisen, wobei das jeweilige vorab geteilte Sender-Schlüsselmaterial jeweilige Geheimanteile eines Zeichner-Privatschlüssels gemäß einem digitalen Signaturschema umfasst, wobei das jeweilige vorab geteilte Empfänger-Schlüsselmaterial jeweilige Geheimanteile eines Verifizierer-Privatschlüssels gemäß dem zugewiesenen digitalen Verifizierer-Signaturschema umfasst, wobei das digitale Signaturschema ein zugewiesenes digitales Verifizierer-Signaturschema ist, wobei der Empfänger-Zeichnerknoten Folgendes umfasst:

- eine Datenschnittstelle (220) zum Zugreifen auf das vorab geteilte Empfänger-Schlüsselmaterial des Empfänger-Zeichnerknotens;
- eine Kommunikationsschnittstelle (280), die zur Kommunikation mit den mehreren Sender-Zeichnerknoten und/oder den mehreren Empfänger-Zeichnerknoten konfiguriert ist;
- ein Prozessorsubsystem (240), das dazu konfiguriert ist, eine zugewiesene Verifizierer-Schwellenwertsignatur zu erhalten, wobei die zugewiesene Verifizierer-Schwellenwertsignatur einen Hashwert und einen geteilten Geheimwert umfasst, wobei:

- der Hashwert auf der Transaktionsnachricht und einem Zufallswert basiert, und
- der geteilte Geheimwert auf einem geteilten Geheimnis gemäß dem Zeichner- und Verifiziererschlüssel basiert und auf dem Hashwert basiert, wobei das geteilte Geheimnis mit dem Zufallswert verblendet ist und die zugewiesene Verifizierer-Schwellenwertsignatur verwendet wird, um gemeinsam mit den mehreren Empfänger-Zeichnerknoten die Authentizität der Transaktionsnachricht in Bezug auf das vorab geteilte Empfänger-Schlüsselmaterial zu verifizieren, wobei das vorab geteilte Empfänger-Schlüsselmaterial des Empfänger-Zeichnerknotens nicht ermöglicht, die Authentizität zu verifizieren, und wobei das kombinierte vorab geteilte Empfänger-Schlüsselmaterial nicht ermöglicht, die zugewiesene Verifizierer-Schwellenwertsignatur zu bestimmen.

10. Ein computerimplementiertes Verfahren (600) zum Teilnehmen als ein Sender-Zeichnerknoten bei einer Authentizitätsverifizierung einer Transaktionsnachricht, wobei die Transaktion mehrere Sender-Zeichnerknoten involviert, wobei die mehreren Sender-Zeichnerknoten den Sender-Zeichnerknoten umfassen, und wobei die Transaktion weiter mehrere Empfänger-Zeichnerknoten involviert, wobei jeweilige Sender-Zeichnerknoten Zugriff auf jeweiliges vorab geteiltes Sender-Schlüsselmaterial aufweisen und jeweilige Empfänger-Zeichnerknoten Zugriff auf jeweiliges vorab geteiltes Empfänger-Schlüsselmaterial aufweisen, wobei das jeweilige vorab geteilte Sender-Schlüsselmaterial jeweilige Geheimanteile eines Zeichner-Privatschlüssels gemäß einem digitalen Signaturschema umfasst, wobei das jeweilige vorab geteilte Empfänger-Schlüsselmaterial jeweilige Geheimanteile eines Verifizierer-Privatschlüssels gemäß dem zugewiesenen digitalen Verifizierer-Signaturschema umfasst, wobei das digitale Signaturschema ein zugewiesenes digitales Verifizierer-Signaturschema ist, wobei das Verfahren Folgendes umfasst:

- Zugreifen (610) auf das vorab geteilte Sender-Schlüsselmaterial des Sender-Zeichnerknotens;
- Durchführen (620) digitaler Kommunikation mit den mehreren Sender-Zeichnerknoten und/oder den mehreren Empfänger-Zeichnerknoten;
- gemeinsam mit den mehreren Sender-Zeichnerknoten, Bestimmen (630) einer zugewiesenen Verifizierer-Schwellenwertsignatur auf der Transaktionsnachricht, wobei die zugewiesene Verifizierer-Schwellenwertsignatur den mehreren Empfänger-Zeichnerknoten ermöglicht, gemeinsam die Authentizität der Transaktionsnachricht in Bezug auf das vorab geteilte Empfänger-Schlüsselmaterial zu verifizieren, wobei das vorab geteilte Sender-Schlüsselmaterial des Sender-Zeichnerknotens nicht ermöglicht, die zugewiesene Verifizierer-Schwellenwertsignatur zu bestimmen, wobei die zugewiesene Verifizierer-Schwellenwertsignatur einen Hashwert und einen geteilten Geheimwert umfasst, wobei:

- der Hashwert auf der Transaktionsnachricht und einem Zufallswert basiert, und
- der geteilte Geheimwert auf einem geteilten Geheimnis gemäß dem Zeichner- und Verifiziererschlüssel basiert und auf dem Hashwert basiert, wobei das geteilte Geheimnis mit dem Zufallswert verblendet wird.

11. Ein computerimplementiertes Verfahren (700) zum Teilnehmen als ein Empfänger-Zeichnerknoten bei einer Authentizitätsverifizierung einer Transaktionsnachricht, wobei die Transaktion mehrere Sender-Zeichnerknoten und mehrere Empfänger-Zeichnerknoten involviert, wobei die mehreren Empfänger-Zeichnerknoten den Empfänger-Zeichnerknoten umfassen, wobei jeweilige Sender-Zeichnerknoten Zugriff auf jeweiliges vorab geteiltes Sender-Schlüsselmaterial aufweisen und jeweiliges Empfänger-Zeichnerknoten Zugriff auf jeweiliges vorab geteiltes Empfänger-Schlüsselmaterial aufweisen, wobei das jeweilige vorab geteilte Sender-Schlüsselmaterial jeweilige Geheimanteile eines Zeichner-Privatschlüssels gemäß einem digitalen Signaturschema umfasst, wobei das jeweilige vorab geteilte Empfänger-Schlüsselmaterial jeweilige Geheimanteile eines Verifizierer-Privatschlüssels gemäß dem zugewiesenen digitalen Verifizierer-Signaturschema umfasst, wobei das digitale Signaturschema ein zugewiesenes digitales Verifizierer-Signaturschema ist, wobei das Verfahren Folgendes umfasst:

- Zugreifen (710) auf das vorab geteilte Empfänger-Schlüsselmaterial des Empfänger-Zeichnerknotens;
- Durchführen (720) digitaler Kommunikation mit den mehreren Sender-Zeichnerknoten und/oder den mehreren Empfänger-Zeichnerknoten;
- Erhalten (730) einer zugewiesenen Verifizierer-Schwellenwertsignatur, die von den mehreren Sender-Zeichnerknoten bestimmt wird, wobei die zugewiesene Verifizierer-Schwellenwertsignatur einen Hashwert und einen geteilten Geheimwert umfasst, wobei:

- der Hashwert auf der Transaktionsnachricht und einem Zufallswert basiert, und
- der geteilte Geheimwert auf einem geteilten Geheimnis gemäß dem Zeichner- und Verifiziererschlüssel basiert und auf dem Hashwert basiert, wobei das geteilte Geheimnis mit dem Zufallswert verblendet ist, und Verwenden der zugewiesenen Verifizierer-Schwellenwertsignatur zum Verifizieren (740), gemeinsam mit den mehreren Empfänger-Zeichnerknoten, der Authentizität der Transaktionsnachricht in Bezug auf das vorab geteilte Empfänger-Schlüsselmaterial, wobei das vorab geteilte Empfänger-Schlüsselmaterial des Empfänger-Zeichnerknotens nicht ermöglicht, die Authentizität zu verifizieren, und wobei das kombinierte vorab geteilte Empfänger-Schlüsselmaterial nicht ermöglicht, die zugewiesene Verifizierer-Schwellenwertsignatur zu bestimmen.

**12.** Ein transitorisches oder nicht-transitorisches computerlesbares Medium (800), das Daten (810) umfasst, die Folgendes darstellen:

- Anweisungen, die, wenn sie von einem Prozessorsystem ausgeführt werden, das Prozessorsystem veranlassen, das computerimplementierte Verfahren nach Anspruch 10 oder 11 durchzuführen; und/oder
- vorab geteiltes Sender-Schlüsselmaterial zur Verwendung durch einen Sender-Zeichnerknoten nach Anspruch 8; und/oder
- vorab geteiltes Empfänger-Schlüsselmaterial zur Verwendung durch einen Empfänger-Zeichnerknoten nach Anspruch 9.

**Revendications**

**1.** Un système (300) de vérification de l'authenticité d'un message de transaction représentant une transaction numérique, dans lequel le système comprend de multiples nœuds de signataire expéditeur (301-1, 301-2, 301-3) et de multiples nœuds de signataire destinataire (302-1, 302-2, 302-3), dans lequel des nœuds de signataire expéditeur respectifs ont accès à du matériel de clé expéditeur pré-partagé respectif (041, 042, 043) et des nœuds de signataire destinataire respectifs ont accès à du matériel de clé destinataire pré-partagé respectif (051, 052, 053), dans lequel le matériel de clé expéditeur pré-partagé respectif comprend des parts de secret respectives d'une clé privée de signataire selon un schéma de signature numérique, dans lequel le matériel de clé destinataire pré-partagé respectif comprend des parts de secret respectives d'une clé privée de vérificateur selon le schéma de signature numérique à vérificateur désigné, dans lequel le schéma de signature numérique est un schéma de signature numérique à vérificateur désigné, dans lequel les multiples nœuds de signataire expéditeur et les multiples nœuds de signataire destinataire sont configurés pour vérifier l'authenticité du message de transaction par :

- au niveau des multiples nœuds de signataire expéditeur, détermination conjointe d'une signature de seuil de vérificateur désigné sur le message de transaction, dans lequel la signature de seuil de vérificateur désigné permet aux multiples nœuds de signataire destinataire de vérifier conjointement l'authenticité du message de transaction par rapport au matériel de clé destinataire pré-partagé, dans lequel le matériel de clé expéditeur pré-partagé d'un seul nœud de signataire expéditeur ne permet pas de déterminer la signature de seuil de vérificateur désigné, dans lequel la signature de seuil de vérificateur désigné comprend une valeur de hachage et une valeur de secret partagé, dans lequel :

- la valeur de hachage est basée sur le message de transaction et une valeur aléatoire, et
- la valeur de secret partagé est basée sur un secret partagé selon les clés de signataire et de vérificateur et sur la base de la valeur de hachage, dans lequel le secret partagé est masqué par la valeur aléatoire ;
- envoyer la signature de seuil de vérificateur désigné depuis les multiples nœuds de signataire expéditeur vers les multiples nœuds de signataire destinataire ;
- au niveau des multiples nœuds de signataire destinataire, utilisation de la signature de seuil de vérificateur désigné pour vérifier conjointement l'authenticité du message de transaction par rapport au matériel de clé destinataire pré-partagé, dans lequel le matériel de clé destinataire pré-partagé d'un seul nœud de signataire destinataire ne permet pas de vérifier l'authenticité, et dans lequel le matériel de clé destinataire pré-partagé combiné ne permet pas de déterminer la signature de seuil de vérificateur désigné.

**2.** Le système (300) selon la revendication 1, dans lequel le système est configuré pour effectuer la transaction numérique sur une chaîne de couche 2 d'un registre distribué, tel qu'une chaîne latérale.

**3.** Le système (300) selon l'une quelconque des revendications précédentes, dans lequel :

- la détermination conjointe de la signature de seuil de vérificateur désigné comprend la génération conjointe aléatoire de la valeur aléatoire et la génération de parts de secret respectives de la valeur de secret partagé sur la base des parts de secret respectives de la clé privée de signataire ; et
- la vérification conjointe de l'authenticité du message de transaction comprend la génération de parts de secret respectives du secret partagé sur la base des parts de secret respectives de la clé privée de vérificateur.

4. Le système (300) selon l'une quelconque des revendications précédentes, dans lequel le matériel de clé destinataire pré-partagé respectif comprend des parts de secret respectives d'une clé publique correspondant à la clé privée de signataire.

5. Le système (300) selon l'une quelconque des revendications précédentes, dans lequel le schéma de signature numérique est basé sur une hypothèse cryptographique de Diffie-Hellman.

6. Le système (300) selon l'une quelconque des revendications précédentes, dans lequel un ou plusieurs des multiples nœuds de signataire destinataire sont en outre configurés pour déterminer un code d'authentification de co-message à partir d'un message de transaction supplémentaire identifiant le destinataire de la transaction numérique et à partir du matériel de clé MAC expéditeur pré-partagé de l'un ou des plusieurs nœuds de signataire destinataire, et dans lequel un ou plusieurs des nœuds de signataire expéditeur sont configurés pour vérifier le code d'authentification de co-message par rapport à un matériel de clé MAC destinataire pré-partagé.

7. Le système (300) selon la revendication 6, dans lequel :

- le matériel de clé MAC expéditeur pré-partagé comprend une première clé cryptographique et une seconde clé cryptographique, et le matériel de clé MAC destinataire pré-partagé comprend la seconde clé cryptographique ;
- le un ou les plusieurs nœuds de signataire destinataire sont configurés pour calculer le code d'authentification de co-message en utilisant la première et seconde clés cryptographiques, et pour calculer en outre un témoin en utilisant la première, mais pas la seconde clé cryptographique, et fournir le témoin au nœud de signataire destinataire ; et
- le un ou les plusieurs nœuds de signataire expéditeur sont configurés pour vérifier le code d'authentification de co-message par rapport au témoin et à la seconde clé cryptographique.

8. Un nœud de signataire expéditeur (100) destiné à être utilisé dans le système de vérification de l'authenticité d'un message de transaction selon l'une quelconque des revendications 1-7, dans lequel le système comprend de multiples nœuds de signataire expéditeur, dans lequel les multiples nœuds de signataire expéditeur comprennent le nœud de signataire expéditeur, et dans lequel le système comprend en outre de multiples nœuds de signataire destinataire, dans lequel des nœuds de signataire expéditeur respectifs ont accès à du matériel de clé expéditeur pré-partagé respectif et des nœuds de signataire destinataire respectifs ont accès à du matériel de clé destinataire pré-partagé, dans lequel le matériel de clé expéditeur pré-partagé respectif comprend des parts de secret respectives d'une clé privée de signataire selon un schéma de signature numérique, dans lequel le matériel de clé destinataire pré-partagé respectif comprend des parts de secret respectives d'une clé privée de vérificateur selon le schéma de signature numérique à vérificateur désigné, dans lequel le schéma de signature numérique est un schéma de signature numérique à vérificateur désigné, dans lequel le nœud de signataire expéditeur comprend :

- une interface de données (120) pour accéder au matériel de clé expéditeur pré-partagé du nœud de signataire expéditeur ;
- une interface de communication (180) configurée pour communiquer avec les multiples nœuds de signataire expéditeur et/ou les multiples nœuds de signataire destinataire ;
- un sous-système de processeur (140) configuré pour, conjointement avec les multiples nœuds de signataire expéditeur, déterminer une signature de seuil de vérificateur désigné sur le message de transaction, dans lequel la signature de seuil de vérificateur désigné permet aux multiples nœuds de signataire destinataire de vérifier conjointement l'authenticité du message de transaction par rapport au matériel de clé destinataire pré-partagé, dans lequel le matériel de clé expéditeur pré-partagé du nœud de signataire expéditeur ne permet pas de déterminer la signature de seuil de vérificateur désigné, dans lequel la signature de seuil de vérificateur désigné comprend une valeur de hachage et une valeur de secret partagé, dans lequel :

- la valeur de hachage est basée sur le message de transaction et une valeur aléatoire, et
- la valeur de secret partagé est basée sur un secret partagé selon les clés de signataire et de vérificateur et sur la base de la valeur de hachage, dans lequel le secret partagé est masqué par la valeur aléatoire.

9. Un nœud de signataire destinataire (200) destiné à être utilisé dans le système de vérification de l'authenticité d'un message de transaction selon l'une quelconque des revendications 1-7, dans lequel le système comprend de multiples nœuds de signataire expéditeur, et de multiples nœuds de signataire destinataire, dans lequel les multiples nœuds de signataire destinataire comprennent le nœud de signataire destinataire, dans lequel des nœuds de signataire expéditeur respectifs ont accès à du matériel de clé expéditeur pré-partagé respectif et des nœuds de signataire destinataire respectifs ont accès à du matériel de clé destinataire pré-partagé, dans lequel le matériel de clé expéditeur pré-partagé respectif comprend des parts de secret respectives d'une clé privée de signataire selon un schéma de signature numérique, dans lequel le matériel de clé destinataire pré-partagé respectif comprend des parts de secret respectives d'une clé privée de vérificateur selon le schéma de signature numérique à vérificateur désigné, dans lequel le schéma de signature numérique est un schéma de signature numérique à vérificateur désigné, dans lequel le nœud de signataire destinataire comprend :

- une interface de données (220) pour accéder au matériel de clé destinataire pré-partagé du nœud de signataire destinataire ;
- une interface de communication (280) configurée pour communiquer avec les multiples nœuds de signataire expéditeur et/ou les multiples nœuds de signataire destinataire ;
- un sous-système de processeur (240) configuré pour obtenir une signature de seuil de vérificateur désigné, dans lequel la signature de seuil de vérificateur désigné comprend une valeur de hachage et une valeur de secret partagé, dans lequel :

- la valeur de hachage est basée sur le message de transaction et une valeur aléatoire, et
- la valeur de secret partagé est basée sur un secret partagé selon les clés de signataire et de vérificateur et sur la base de la valeur de hachage, dans lequel le secret partagé est masqué par la valeur aléatoire et pour, en utilisant la signature de seuil de vérificateur désigné conjointement avec les multiples nœuds de signataire destinataire, vérifier l'authenticité du message de transaction par rapport au matériel de clé destinataire pré-partagé, dans lequel le matériel de clé destinataire pré-partagé du nœud de signataire destinataire ne permet pas de vérifier l'authenticité, et dans lequel le matériel de clé destinataire pré-partagé combiné ne permet pas de déterminer la signature de seuil de vérificateur désigné.

10. Un procédé mis en œuvre par ordinateur (600) pour participer en tant que nœud de signataire expéditeur à la vérification de l'authenticité d'un message de transaction, dans lequel la transaction implique de multiples nœuds de signataire expéditeur, dans lequel les multiples nœuds de signataire expéditeur comprennent le nœud de signataire expéditeur, et dans lequel la transaction implique en outre de multiples nœuds de signataire destinataire, dans lequel des nœuds de signataire expéditeur respectifs ont accès à du matériel de clé expéditeur pré-partagé respectif et des nœuds de signataire destinataire respectifs ont accès à du matériel de clé destinataire pré-partagé, dans lequel le matériel de clé expéditeur pré-partagé respectif comprend des parts de secret respectives d'une clé privée de signataire selon un schéma de signature numérique, dans lequel le matériel de clé destinataire pré-partagé respectif comprend des parts de secret respectives d'une clé privée de vérificateur selon le schéma de signature numérique à vérificateur désigné, dans lequel le schéma de signature numérique est un schéma de signature numérique à vérificateur désigné, dans lequel le procédé consiste à :

- accéder (610) au matériel de clé expéditeur pré-partagé du nœud de signataire expéditeur ;
- réaliser (620) une communication numérique avec les multiples nœuds de signataire expéditeur et/ou les multiples nœuds de signataire destinataire ;
- conjointement avec les multiples nœuds de signataire expéditeur, déterminer (630) une signature de seuil de vérificateur désigné sur le message de transaction, dans lequel la signature de seuil de vérificateur désigné permet aux multiples nœuds de signataire destinataire de vérifier conjointement l'authenticité du message de transaction par rapport au matériel de clé destinataire pré-partagé, dans lequel le matériel de clé expéditeur pré-partagé du nœud de signataire expéditeur ne permet pas de déterminer la signature de seuil de vérificateur désigné, dans lequel la signature de seuil de vérificateur désigné comprend une valeur de hachage et une valeur de secret partagé, dans lequel :

- la valeur de hachage est basée sur le message de transaction et une valeur aléatoire, et
- la valeur de secret partagé est basée sur un secret partagé selon les clés de signataire et de vérificateur et sur la base de la valeur de hachage, dans lequel le secret partagé est masqué par la valeur aléatoire.

11. Un procédé mis en œuvre par ordinateur (700) pour participer en tant que nœud de signataire destinataire à une vérification de l'authenticité d'un message de transaction, dans lequel la transaction implique de multiples nœuds de signataire expéditeur et de multiples nœuds de signataire destinataire dans lequel les multiples nœuds de signataire destinataire comprennent le nœud de signataire destinataire, dans lequel des nœuds de signataire expéditeur respectifs ont accès à du matériel de clé expéditeur pré-partagé respectif et des nœuds de signataire destinataire respectifs ont accès à du matériel de clé destinataire pré-partagé, dans lequel le matériel de clé expéditeur pré-partagé respectif comprend des parts de secret respectives d'une clé privée de signataire selon un schéma de signature numérique, dans lequel le matériel de clé destinataire pré-partagé respectif comprend des parts de secret respectives d'une clé privée de vérificateur selon le schéma de signature numérique à vérificateur désigné, dans lequel le schéma de signature numérique est un schéma de signature numérique à vérificateur désigné, dans lequel le procédé consiste à :

- accéder (710) au matériel de clé destinataire pré-partagé du nœud de signataire destinataire ;
- réaliser (720) une communication numérique avec les multiples nœuds de signataire expéditeur et/ou les multiples nœuds de signataire destinataire ;
- obtenir (730) une signature de seuil de vérificateur désigné déterminée par les multiples nœuds de signataire expéditeur, dans lequel la signature de seuil de vérificateur désigné comprend une valeur de hachage et une valeur de secret partagé, dans lequel :

- la valeur de hachage est basée sur le message de transaction et une valeur aléatoire, et
- la valeur de secret partagé est basée sur un secret partagé selon les clés de signataire et de vérificateur et sur la base de la valeur de hachage, dans lequel le secret partagé est masqué par la valeur aléatoire et pour, en utilisant la signature de seuil de vérificateur désigné conjointement avec les multiples nœuds de signataire destinataire, vérifier (740) l'authenticité du message de transaction par rapport au matériel de clé destinataire pré-partagé, dans lequel le matériel de clé destinataire pré-partagé du nœud de signataire destinataire ne permet pas de vérifier l'authenticité, et dans lequel le matériel de clé destinataire pré-partagé combiné ne permet pas de déterminer la signature de seuil de vérificateur désigné.

12. Un support lisible par ordinateur transitoire ou non transitoire (800) comprenant des données (810) représentant :

- des instructions qui, lorsqu'elles sont exécutées par un système de processeur, amènent le système de processeur à réaliser le procédé mis en œuvre par ordinateur selon la revendication 10 ou 11 ; et/ou
- du matériel de clé expéditeur pré-partagé destiné à être utilisé par un nœud de signataire expéditeur selon la revendication 8 ; et/ou
- du matériel de clé destinataire pré-partagé destiné à être utilisé par un nœud de signataire destinataire selon la revendication 9.

Fig. 1

Fig. 2

Fig. 3a

440    450

401    $d_a, d_b$    $d_b$    402

$d = d_a + d_b$
410    $\tau \leftarrow H(m)^d \bmod n$    411
$w \leftarrow s^{d_a}$    $w, \tau$

**if** $wH(m)^{d_b} \bmod n == \tau$    412
**then** accept **else** reject

Fig. 4a

441    451

401'    $d_a, d_b, d$    $d_b$    402'

$\tau \leftarrow H(m)^d \bmod n$
420    $w = H(m)^{d_a} \bmod n$ and $t = H(w)$    421
$\tau' = H(\tau, t, m)$    $w, \tau'$

**if** $H(wH(m)^{d_b} \bmod n, H(w), m) == \tau'$    422
**then** accept **else** reject

Fig. 4b

$$\tau \leftarrow \mu_{d_b}(m, \mu_{d_a}(m))$$
$$w \leftarrow \mu_{d_a}(m)$$

430

442

452

401"

$d_a, d_b$

$d_b$

402"

431

$w$

**if** $\mu_{m,d_b}(w) == \tau$

**then** accept **else** reject

432

Fig. 4c

443,453

443

453

403

$d, e$

401""

$d_i$

$e_i$

402""

KeyGen

441

$$d_i = f(i), v_i = v^{d_i}$$

440

442

$$e_i = f'(i), v_i' = v^{e_i}$$

TSig

443

Sig

444

445

TVer

Fig. 4d

34

540       550

501    $x_i, Y$       $y_i, X$    502

530

DKG

534'

$$s = H(m||t), r_i = Y^{x_i s}, r = t\prod r_i^{L_i}$$

$r, s$

533

$$\gamma_i = X^{-y_i s}, t = r\prod \gamma_i^{L_i}, H(m||t) =^? s$$

535

Fig. 5

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **A. GANGWAL et al.** *A Survey of Layer-Two Blockchain Protocols*, https://arxiv.org/pdf/2204.08032.pdf
- **K. MARTIN et al.** Threshold MACs. *Proceedings ICISC'02*
- **A. SHAMIR**. How to share a secret. *Comm. ACM*, 1979, vol. 22 (22), 612-613
- **R. PEETERS et al.** Practical RSA Threshold Decryption for Things That Think. *Proceedings of WISSec*, 2008
- **F. YANG** ; **C. LIAO**. A Provably Secure and Efficient Strong Designated Verifier Signature Scheme. *International Journal of Network Security*, 2010, vol. 11 (2), 60-64
- **F. YANG** ; **C. LIAO**. A Provably Secure and Efficient Strong Designated Verifier Signature Scheme. *International Journal of Network Security*, 2010
- **I. CASCUDO et al.** *Mt. random: Multi-tiered randomness beacons*, https://ia.cr/2021/1096